(19) Europäisches Patentamt
European Patent Office
Office européen des brevets

(11) EP 4 734 215 A2

(12) **EUROPEAN PATENT APPLICATION**

(43) Date of publication:
**29.04.2026 Bulletin 2026/18**

(21) Application number: **25213006.7**

(22) Date of filing: **30.07.2021**

(51) International Patent Classification (IPC):
***H01M 10/0569*** *(2010.01)*

(52) Cooperative Patent Classification (CPC):
**H01M 10/0567; H01M 10/0525; H01M 10/0569;**
H01M 2300/0037; Y02E 60/10

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(62) Document number(s) of the earlier application(s) in accordance with Art. 76 EPC:
**21946250.4 / 4 160 773**

(71) Applicant: **Contemporary Amperex Technology (Hong Kong) Limited**
**Central, Central And Western District (HK)**

(72) Inventors:
- **ZHANG, Limei**
  **Ningde City, Fujian 352100 (CN)**
- **CHEN, Peipei**
  **Ningde City, Fujian 352100 (CN)**
- **LI, Liye**
  **Ningde City, Fujian 352100 (CN)**

(74) Representative: **Gong, Jinping**
**CocreateIP**
**Neumarkter Straße 21**
**81673 München (DE)**

Remarks:
- This application was filed on 03-11-2025 as a divisional application to the application mentioned under INID code 62.
- Claims filed after the date of filing of the application / after the date of receipt of the divisional application (Rule 68(4) EPC).

(54) **ELECTROLYTE SOLUTION, SECONDARY BATTERY, BATTERY MODULE, BATTERY PACK AND POWERED DEVICE**

(57) The present application discloses an electrolyte solution, a secondary battery, a battery module, a battery pack and a powered device. The electrolyte solution comprises an organic solvent and an additive, the organic solvent comprises a first organic solvent shown in Formula 1, and the additive comprises a first additive selected from one or more of compounds represented by Formula 2A and Formula 2B. In Formula 1, $R_1$ and $R_2$ are each independently one of C1-C3 alkyl and C1-C3 haloalkyl; in Formula 2A, $R_{21}$, $R_{22}$, $R_{23}$, and $R_{24}$ are each independently one of single bond and methylene; in Formula 2B, $R_{31}$, $R_{32}$, $R_{33}$, and $R_{34}$ are each independently one of a single bond and methylene, and $R_4$ is one of a single bond, -O-, C1-C3 alkylene, C1-C3 haloalkylene, and C1-C3 oxaalkylene. The secondary battery of the present application has good fast charging performance while ensuring long cycle life and storage life.

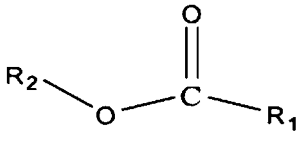
Formula 1

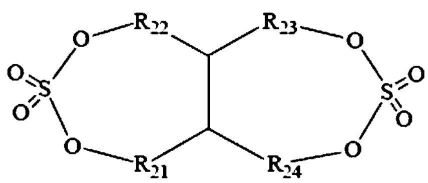
Formula 2A

EP 4 734 215 A2

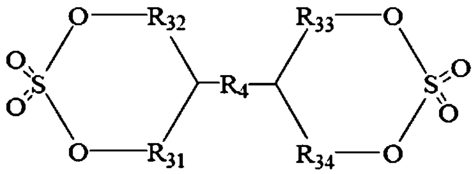

Formula 2B

5

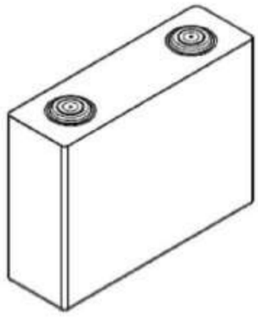

FIG. 1

## Description

### Technical Field

The present application belongs to the technical field of secondary batteries, and specifically relates to an electrolyte solution, a secondary battery, a battery module, a battery pack and a powered device.

### Background Art

Global climate change and environmental pollution problems are becoming more and more serious, and battery-driven electric vehicles have flourished due to their outstanding green and pollution-free characteristics. However, compared with the fast and timely refueling of conventional gasoline-fueled vehicles, electric vehicles tend to take longer to charge because electric vehicles are generally charged at a smaller rate. This issue with electric vehicles not only creates anxiety about range for consumers, but also limits the rapid development of electric vehicles.

### Summary of the Invention

An objective of the present application is to provide an electrolyte solution, a secondary battery, a battery module, a battery pack, and a powered device, in order to enable the battery to have a long cycle life and storage life, as well as good fast charging performance.

A first aspect of the present application provides an electrolyte solution comprising an organic solvent and an additive. The organic solvent comprises a first organic solvent shown in Formula 1. In Formula 1, $R_1$ and $R_2$ are each independently one of C1-C3 alkyl and C1-C3 haloalkyl. The additive comprises a first additive selected from one or more of the compounds represented by Formula 2A and Formula 2B, wherein in Formula 2A, $R_{21}$, $R_{22}$, $R_{23}$, $R_{24}$ are each independently one of a single bond and methylene, and in Formula 2B, $R_{31}$, $R_{32}$, $R_{33}$, and $R_{34}$ are each independently one of a single bond and methylene, and $R_4$ is one of a single bond, -O-, C1-C3 alkylene, C1-C3 haloalkylene, and C1-C3 oxaalkylene.

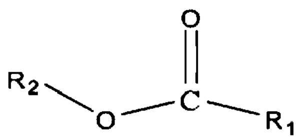
Formula 1

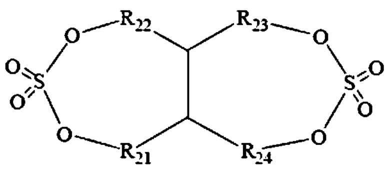
Formula 2A

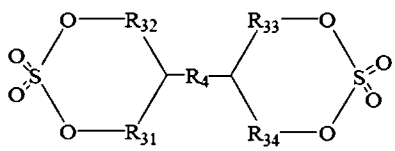
Formula 2B

The use of the first additive in combination with the first organic solvent can ensure good cycling performance and storage performance of the battery while fully exerting the effect of the first organic solvent on improving the conductivity of the electrolyte solution.

In any embodiment of the present application, in Formula 1, $R_1$ and $R_2$ are each independently one of methyl, ethyl, propyl, fluoromethyl, fluoroethyl, and fluoropropyl. The first organic solvent can be properly selected to keep the viscosity of the electrolyte solution within a suitable range, so the electrolyte solution has higher conductivity and the battery has better fast charging performance.

In any embodiment of the present application, the first organic solvent is selected from one or more of the following compounds:

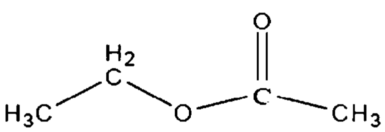
Compound 1-1,

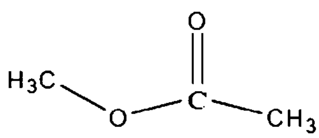
Compound 1-2,

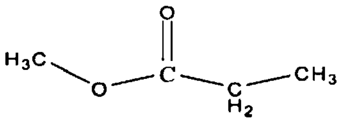 Compound 1-3, 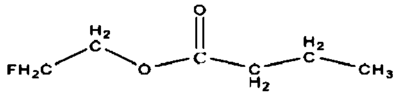 Compound 1-4,

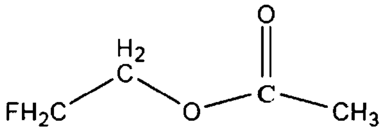 Compound 1-5, 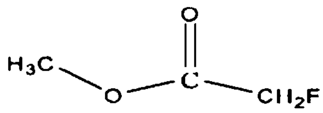 Compound 1-6.

The use of the above compounds as the first organic solvent can make the electrolyte solution have moderate viscosity and higher conductivity.

In any embodiment of the present application, the first organic solvent is selected from one or two of the following compounds:

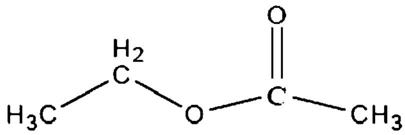 Compound 1-1, 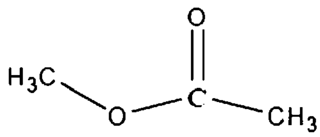 Compound 1-2.

Compound 1-1 and Compound 1-2 have lower viscosity, which can improve the conductivity of the electrolyte solution more obviously.

In any embodiment of the present application, in Formula 2A, $R_{21}$, $R_{22}$, $R_{23}$, and $R_{24}$ are each independently one of a single bond and methylene.

Optionally, $R_{21}$, $R_{22}$, $R_{23}$, and $R_{24}$ are not all single bonds.

More specifically, one or both of $R_{21}$ and $R_{22}$ are methylene, and one or both of $R_{23}$ and $R_{24}$ are methylene.

In any embodiment of the present application, in Formula 2B, $R_{31}$, $R_{32}$, $R_{33}$, and $R_{34}$ are each independently one of a single bond and methylene, and $R_{31}$, $R_{32}$, $R_{33}$, and $R_{34}$ are not all single bonds.

In any embodiment of the present application, in Formula 2B, $R_4$ is one of a single bond, -O-, methylene, ethylene, propylene, fluoromethylene, fluoroethylene, fluoropropylene, methyleneoxy, ethyleneoxy and propyleneoxy.

Optionally, $R_4$ is one of a single bond, methylene, ethylene and propylene.

The first additive whose substituents are within the above range can form a dense and stable interfacial film on the surface of the negative electrode active material, which blocks the direct contact between the first organic solvent and the negative electrode active material, and thus can further improve the reversibility of intercalation and deintercalation of active ions between the positive and negative electrode sheets and improve the discharge capacity and cycling performance of the battery.

In any embodiment of the present application, when $R_4$ is a single bond, one or both of $R_{31}$ and $R_{32}$ are methylene, and the rest are single bonds.

In any embodiment of the present application, when $R_4$ is a single bond, one or both of $R_{33}$ and $R_{34}$ are methylene, and the rest are single bonds.

In any embodiment of the present application, when $R_4$ is a single bond, one of $R_{31}$ and $R_{32}$ is methylene, one of $R_{33}$ and $R_{34}$ is methylene, and the rest are single bonds.

In any embodiment of the present application, when $R_4$ is a single bond, $R_{31}$, $R_{32}$ are both methylene, and one of $R_{33}$ and $R_{34}$ is methylene, and the rest are single bonds.

In any embodiment of the present application, when $R_4$ is a single bond, $R_{33}$ and $R_{34}$ are both methylene, and one of $R_{31}$ and $R_{32}$ is methylene, and the rest are single bonds.

In any embodiment of the present application, when $R_4$ is a single bond, $R_{31}$, $R_{32}$, $R_{33}$ and $R_{34}$ are all methylene.

In any embodiment of the present application, the first additive is selected from one or more of the following compounds:

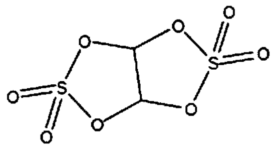 Compound 2-1, 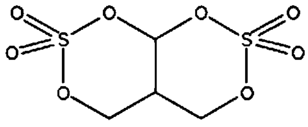 Compound 2-2,

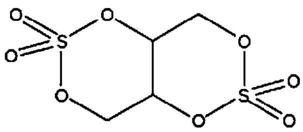 Compound 2-3, 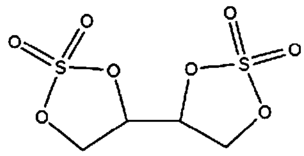 Compound 2-4,

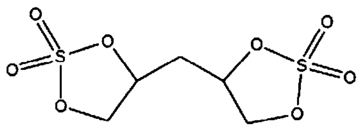 Compound 2-5, 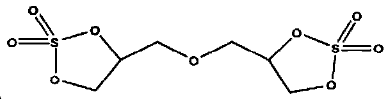 Compound 2-6,

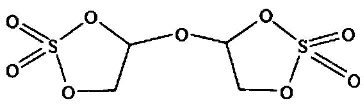 Compound 2-7, 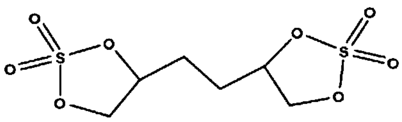 Compound 2-8.

The above-mentioned first additive can form a stable and durable interfacial film on the surface of the negative electrode active material, thereby further improving the cycling performance and storage performance of the battery.

In any embodiment of the present application, optionally, the first additive is selected from one or more of the following compounds:

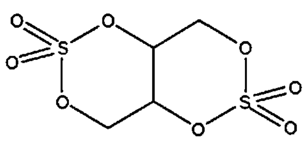 Compound 2-3, 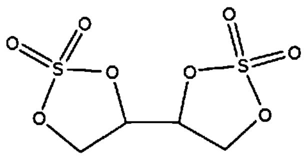 Compound 2-4,

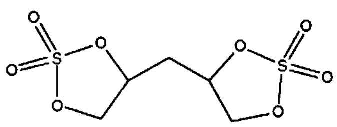 Compound 2-5, 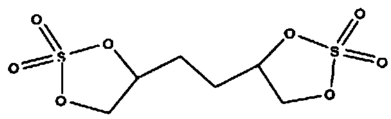 Compound 2-8.

In any embodiment of the present application, wherein, based on the total mass of the organic solvent, the mass percentage w1 of the first organic solvent is in the range of 20% to 80%. Optionally, w1 ranges from 30% to 70%. The mass percentage of the first organic solvent is controlled within an appropriate range, which can provide the battery with good cycling performance and storage performance while improving the fast charging performance of the battery.

In any embodiment of the present application, based on the total mass of the electrolyte solution, the mass percentage w2 of the first additive is in the range of 0.1% to 10%. Optionally, w2 ranges from 0.5% to 5%. The mass percentage of the first additive is controlled within an appropriate range, which enables the battery to have good fast charging performance, cycling performance and storage performance.

In any embodiment of the present application, the additive further comprises a second additive, and the second additive is one or more of cyclic carbonate compounds containing an unsaturated bond, halogen-substituted cyclic carbonate compounds, sulfate compounds, sulfite compounds, sultone compounds, disulfonic acid compounds, nitrile compounds, aromatic compounds, isocyanate compounds, phosphazene compounds, cyclic acid anhydride compounds, phosphite compounds, phosphate compounds, borate compounds, and carboxylate compounds. These second additives can form a denser and more stable interfacial film on the surface of the positive electrode active material and/or the negative electrode active material, which helps to further improve the cycling performance and storage performance of the battery.

In any embodiment of the present application, the second additive comprises one or more of the following compounds:

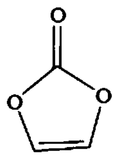 Compound 3-1, 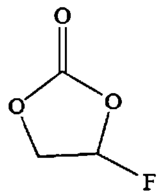 Compound 3-2.

When the electrolyte solution contains one or both of the above two compounds, the cycling performance and storage performance of the battery can be further enhanced.

In any embodiment of the present application, based on the total mass of the electrolyte solution, the mass percentage w3 of the second additive is ≤10%. Optionally, w3 is ≤5%. The mass percentage of the second additive is controlled within an appropriate range, which can further enhance the cycling performance of the battery.

In any embodiment of the present application, the organic solvent further comprises a second organic solvent, and the second organic solvent comprises one or more of cyclic carbonate compounds and chain carbonate compounds. Optionally, the second organic solvent comprises a cyclic carbonate compound, or a combination of a cyclic carbonate compound and a chain carbonate compound. The organic solvent also comprises the above-mentioned second organic solvent, which enables the battery containing the electrolyte solution to have good fast charging performance.

In any embodiment of the present application, the second organic solvent comprises one or more of ethylene carbonate, propylene carbonate, 1,2-butene carbonate, dimethyl carbonate, methyl ethyl carbonate, diethyl carbonate, dipropyl carbonate, methyl propyl carbonate and ethyl propyl carbonate. The electrolyte solution containing the second organic solvent composed of the above-mentioned compounds can make the battery containing the electrolyte solution have better fast charging performance.

In any embodiment of the present application, based on the total mass of the organic solvent, the mass percentage w4 of the cyclic carbonate compound is in the range of 20% to 80%. Optionally, w4 is in the range of 20% to 50%. Cyclic carbonate compounds have higher dielectric constants, which is favorable for the dissociation of lithium salts. The mass percentage of the cyclic carbonate compound is controlled in an appropriate range, which enables the battery containing the electrolyte solution to have more excellent fast charging performance.

In any embodiment of the present application, the electrolyte solution further comprises a lithium salt, and the lithium salt comprises one or more of $LiN(C_xF_{2x+1}SO_2)(C_yF_{2y+1}SO_2)$, $LiPF_6$, $LiBF_4$, LiBOB, LiDFOB, $LiPO_2F_2$, LiDFOP, LiTFOP, $LiAsF_6$, $Li(FSO_2)_2N$, $LiCF_3SO_3$ and $LiClO_4$, wherein x and y are positive integers. The above-mentioned lithium salt is comprised in the electrolyte solution, which can help to form a uniform, dense and low-impedance interfacial film on the surface of the negative electrode active material of the battery, and effectively improve the fast charging performance and cycling performance of the battery.

In any embodiment of the present application, the conductivity of the electrolyte solution satisfies ≥12mS/cm. Optionally, the conductivity of the electrolyte solution satisfies ≥13mS/cm. The conductivity of the electrolyte solution is controlled in an appropriate range, which enables the battery to have good fast charging performance, cycling performance, storage performance and safety performance.

In any embodiment of the present application, the conductivity of the electrolyte solution is 12mS/cm - 24mS/cm. Optionally, the conductivity of the electrolyte solution is 13mS/cm - 20mS/cm.

A second aspect of the present application provides a secondary battery comprising the electrolyte solution of the first aspect of the present application.

The secondary battery of the present application comprises the electrolyte solution of the first aspect of the present application, and the secondary battery has excellent cycling performance and storage performance as well as good fast charging performance.

In any embodiment of the present application, the secondary battery comprises a negative electrode sheet, and the negative electrode sheet comprises a negative electrode current collector and a negative electrode film layer provided on at least one surface of the negative electrode current collector and comprising a negative electrode active material. The ratio H/Dv50 of the thickness H of the single-sided negative electrode film layer to the volume average particle size Dv50 of the negative electrode active material satisfies ≥3. Optionally, H/Dv50 satisfies ≥3.5. More specifically, the range of H/Dv50 satisfies 4≤H/Dv50≤9. The value of H/Dv50 is in an appropriate range, which can further improve the fast charging performance of the secondary battery on the basis of ensuring that the secondary battery has a higher volumetric energy density.

In any embodiment of the present application, the thickness H of the single-sided negative electrode film layer satisfies ≥60μm. Optionally, the thickness H of the single-sided negative electrode film layer satisfies ≥65μm. The

thickness H of the single-sided negative electrode film layer is in an appropriate range, which can further improve the energy density of the battery.

In any embodiment of the present application, the volume average particle size Dv50 of the negative electrode active material satisfies $\leq 18\mu m$. Optionally, the volume average particle size Dv50 of the negative electrode active material satisfies $14\mu m \leq Dv50 \leq 18\mu m$. The volume average particle size Dv50 of the negative electrode active material is in a suitable range, which can not only improve the diffusion coefficient of active ions, but also reduce the contact area between the negative electrode film layer and the electrolyte solution, enabling the battery to have good fast charging performance, cycling performance and storage performance.

In any embodiment of the present application, the compaction density of the negative electrode film layer is $1.4g/cm^3$ to $1.85g/cm^3$. Optionally, the compaction density of the negative electrode film layer is $1.6g/cm^3$ to $1.8g/cm^3$. The compaction density of the negative electrode film layer is in an appropriate range, which enables the battery to have both high energy density and good fast charging performance.

In any embodiment of the present application, the secondary battery comprises a positive electrode sheet, the positive electrode sheet comprises a positive electrode active material comprising one or more of a lithium transition metal oxide, an olivine-structured lithium-containing phosphate, and their respective modified compounds.

In any embodiment of the present application, the olivine-structured lithium-containing phosphates comprises one or more of lithium iron phosphate, composite materials of lithium iron phosphate and carbon, lithium manganese phosphate, composite materials of lithium manganese phosphate and carbon, lithium manganese iron phosphate, composite materials of lithium manganese iron phosphate and carbon, and their modified compounds. The use of these positive electrode active materials in the positive electrode film layer can improve the battery's rate performance and energy density while improving the battery's cycling performance and storage performance.

A third aspect of the present application provides a battery module comprising the secondary battery of the second aspect of the present application.

A fourth aspect of the present application provides a battery pack comprising one of the secondary battery of the second aspect of the present application or the battery module of the third aspect of the present application.

A fifth aspect of the present application provides a powered device comprising at least one of the secondary battery of the second aspect of the present application, the battery module of the third aspect of the present application, and the battery pack of the fourth aspect of the present application.

The battery module, the battery pack and the powered device of the present application comprise the secondary battery provided by the present application, and thus have at least the same advantages as those of the secondary battery.

**Description of Drawings**

In order to illustrate the technical solutions of the examples of the present application more clearly, the drawings required in the examples of the present application will be briefly introduced below. Obviously, the drawings described below are only some examples of the present application. For those of ordinary skill in the art, other drawings can also be obtained according to the drawings without any creative effort.

Fig. 1 is a schematic diagram of an embodiment of a secondary battery according to the present application.
Fig. 2 is a schematic exploded diagram of an embodiment of a secondary battery according to the present application.
Fig. 3 is a schematic diagram of an embodiment of a battery module according to the present application.
Fig. 4 is a schematic diagram of an embodiment of a battery pack according to the present application.
Fig. 5 is an exploded view of Fig. 4.
Fig. 6 is a schematic diagram of an embodiment of a powered device using a secondary battery as a power source according to the present application.

**Detailed Description**

In order to make the invention purpose, technical solution and beneficial technical effect of the present application clearer, the present application will be further described in detail below with reference to examples. It should be understood that the examples described in the specification are only for explaining rather than limiting the present application.

For the sake of brevity, the present application specifically discloses some numerical ranges. However, any lower limit can be combined with any upper limit to form a range not explicitly recited; and any lower limit can be combined with another lower limit to form a range not explicitly recited, and likewise, any upper limit can be combined with any another upper limit to form a range not explicitly recited. Furthermore, every point or single value between the endpoints of a range is comprised within the range, even if not expressly recited. Therefore, each point or individual numerical value can itself be used as a lower limit or an upper limit to combine with any another point or individual numerical value or with another lower limit or upper limit to form a range not explicitly recited.

In the description herein, it should be noted that, unless otherwise specified, "above" and "below" are inclusive of the number itself, and "more" in "one or more" means two or more.

In the description herein, unless otherwise stated, the term "or" is inclusive. For example, the phrase "A or B" means "A, B, or both A and B." More specifically, the condition "A or B" is satisfied by either of the following: A is true (or present) and B is false (or absent); A is false (or absent) and B is true (or present) ; or both A and B are true (or present).

It should be understood that relational terms such as "first", "second", are only used to distinguish one entity or operation from another entity or operation, and do not necessarily require or imply the presence of any actual relationship or order between these entities or operations.

The above summary of the invention of the present application is not intended to describe each disclosed embodiment or every implementation in the present application. The following description illustrates exemplary embodiments in more detail. In various places throughout the present application, guidance is provided through a series of examples, and these examples can be used in various combinations. In the examples, the enumeration is merely a representative group and should not be construed as exhaustive.

[Secondary battery]

Secondary batteries, also known as rechargeable batteries or storage batteries, refer to batteries that, after being discharged, can activate active materials by charging for continuous use.

Typically, a secondary battery comprises a positive electrode sheet, a negative electrode sheet, a separator and an electrolyte solution. During charging and discharging of the battery, active ions (such as lithium ions) are intercalated and deintercalated back and forth between the positive electrode sheet and the negative electrode sheet. The separator is provided between the positive electrode sheet and the negative electrode sheet, and mainly functions to prevent a short circuit between the positive electrode and the negative electrode while allowing active ions to pass through. The electrolyte solution mainly serves to conduct active ions between the positive electrode sheet and the negative electrode sheet.

[Electrolyte solution]

The secondary battery comprises an electrolyte solution, which is the bridge for the active ions in the secondary battery, plays the role of transporting active ions between the positive and negative electrodes in the battery, and is of great importance for the fast charging performance, specific capacity, cycling efficiency and safety performance of the battery.

The inventors found that one of the important factors affecting the fast charging performance of the battery is the conductivity of the electrolyte solution. The conductivity of the electrolyte solution and the fast charging performance of the battery can be improved by adding carboxylate to the electrolyte solution. This is because carboxylate has the advantages of low viscosity and high dielectric constant. When applied to the electrolyte solution, carboxylate can improve the ionic conductivity of the electrolyte solution. However, carboxylate is incompatible with the negative electrode, and the $\alpha$-H on the carboxylate easily reacts with the active lithium obtained by reduction at the negative electrode, resulting in the loss of active lithium and affecting the cycling performance and storage performance of the battery, especially in a high temperature environment. In addition, carboxylate has poor oxidation resistance and is prone to oxidative decomposition when stored in a high state of charge, which further affects the storage performance of the battery. In order to reduce the negative impact of carboxylate on the cycling performance and storage performance of the battery, the prior art reported adding cyclic sulfate to the electrolyte solution. Cyclic sulfate can form an interfacial film on both the positive and negative electrode active materials to block the direct contact between the positive electrode active material, the negative electrode active material and the electrolyte solution, thereby suppressing the continuous reaction between the negative electrode and the carboxylate in the electrolyte solution. However, conventional cyclic sulfates also generate gases during the formation of the interfacial film, and these continuously generated gases will be enriched at the interface of the positive electrode sheet, the negative electrode sheet and the separator to form macroscopic bubbles, which may block the transport of active ions, thus also affecting the cycling performance and storage performance of the battery.

The inventors further conducted a lot of research and skillfully added the first additive represented by Formula 2A and/or Formula 2B to the electrolyte solution containing carboxylate to break the above bottleneck. The electrolyte solution of the present application can ensure that the battery has good cycling performance and storage performance while fully exerting the effect of carboxylate on improving the conductivity of the electrolyte solution and the fast charging performance of the battery, especially ensure that the battery still has good cycling performance and storage performance in a high temperature environment.

Specifically, the electrolyte solution of the present application comprises an organic solvent and an additive, wherein the organic solvent comprises a first organic solvent shown in Formula 1, and the additive comprises a first additive selected from one or more of compounds represented by Formula 2A and Formula 2B. Specifically, in some embodiments, the first additive is selected from one or more of the compounds represented by Formula 2A; in some embodiments, the first additive is selected from one or more of the compounds represented by Formula 2B; in some

embodiments, the first additive comprises both a compound represented by Formula 2A and a compound represented by Formula 2B.

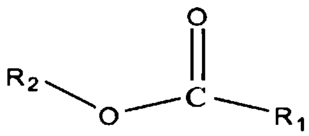
Formula 1

In Formula 1, $R_1$ and $R_2$ are each independently one of C1-C3 alkyl and C1-C3 haloalkyl, and $R_1$ and $R_2$ may be the same or different. The alkyl and haloalkyl may have a linear structure or a branched structure. The number of halogen atoms in the haloalkyl may be one or more; when there are more than one halogen atoms in the haloalkyl, these halogen atoms may be the same or different.

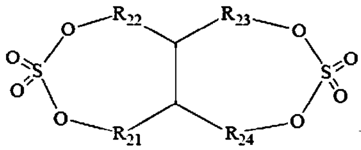
Formula 2A

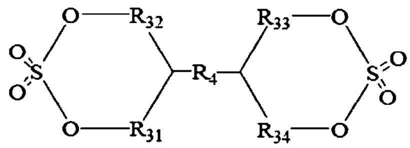
Formula 2B

In Formula 2A, $R_{21}$, $R_{22}$, $R_{23}$ and $R_{24}$ are each independently one of a single bond and methylene ($-CH_2-$). $R_{21}$, $R_{22}$, $R_{23}$ and $R_{24}$ may be the same or different.

In Formula 2B, $R_{31}$, $R_{32}$, $R_{33}$, and $R_{34}$ are each independently one of a single bond and methylene, and $R_4$ is one of a single bond, -O-, C1-C3 alkylene, C1-C3 haloalkylene and C1-C3 oxaalkylene. The alkylene, haloalkylene, and oxaalkylene may have a linear structure or a branched structure. The number of halogen atoms in the haloalkylene may be one or more; when there are more than one halogen atoms in the haloalkylene, these halogen atoms may be the same or different. The number of oxygen atoms in the oxaalkylene may be one or more.

When $R_{31}$, $R_{32}$, $R_{33}$, and $R_{34}$ are single bonds, it means that $R_4$ is directly bonded to -O-adjacent to $R_{31}$, $R_{32}$, $R_{33}$, and $R_{34}$ by a single bond. $R_{31}$, $R_{32}$, $R_{33}$ and $R_{34}$ may be the same or different.

The first additive added into the electrolyte solution of the present application has a high reduction potential, can accept electrons from the negative electrode and reduce itself during charging, and form a dense and stable sulfur-containing organic interfacial film on the surface of the negative electrode active material prior to the first organic solvent, thereby inhibiting the reaction between the first organic solvent and the active lithium resulting from reduction at the negative electrode. The first additive has high thermal stability, does not generate gases during the formation of the sulfur-containing organic interfacial film, and does not affect the cycling performance and storage performance of the battery, especially in a high temperature environment. The first additive can also form an interfacial film on the surface of the positive electrode active material prior to the first organic solvent to inhibit the oxidative decomposition of the first organic solvent on the positive electrode; the first additive can also coordinate with the transition metal on the surface of the positive electrode active material to form a complex , making the interfacial film formed on the surface of the positive electrode active material more dense and stable, and effectively preventing the direct contact between the organic solvent (especially the first organic solvent) and the positive electrode active material.

The use of the first additive in combination with the first organic solvent can ensure good cycling performance and storage performance of the battery while fully exerting the effect of the first organic solvent on improving the conductivity of the electrolyte solution. Therefore, the electrolyte solution of the present application can make the battery have excellent fast charging performance, good cycling performance and storage performance.

Without wishing to be bound by any theory, the inventors discovered for the first time during the research process that the first additive added to the electrolyte solution plays a far superior role in inhibiting the reaction between the first organic solvent and the negative electrode and ensuring that the battery has good cycling performance and storage performance, as compared with conventional cyclic sulfates (e.g., ethylene sulfate (DTD)) used in the prior art.

In some embodiments, in Formula 1, $R_1$ and $R_2$ are each independently one of methyl, ethyl, propyl, fluoromethyl, fluoroethyl, and fluoropropyl. $R_1$ and $R_2$ may be the same or different. The number of fluorine atoms may be one or more. When $R_1$ and $R_2$ are selected from the abovementioned groups, the viscosity of the electrolyte solution can be kept within a suitable range, so the electrolyte solution has higher conductivity and the battery has better fast charging performance.

In some embodiments, the first organic solvent may be selected from one or more of the following compounds:

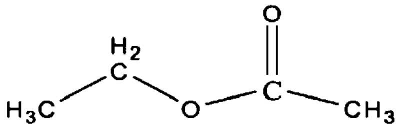 Compound 1-1, 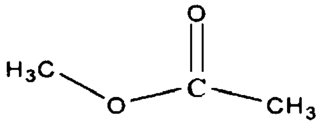 Compound 1-2,

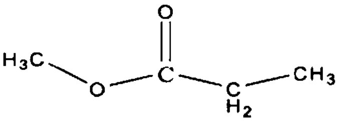 Compound 1-3, 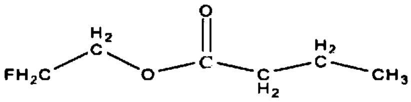 Compound 1-4,

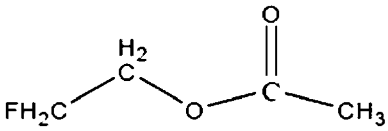 Compound 1-5, 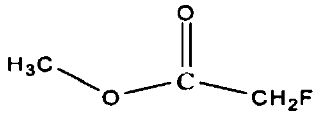 Compound 1-6.

The inventors found that when the electrolyte solution comprises one or more of the above compounds, the electrolyte solution has moderate viscosity and higher conductivity, so that the fast charging performance of the battery can be significantly improved.

In some embodiments, the first organic solvent may be selected from one or two of the following compounds:

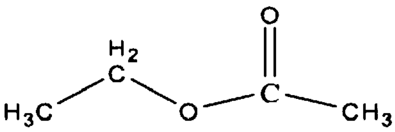 Compound 1-1, 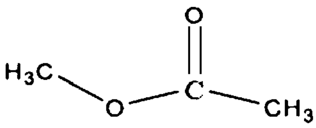 Compound 1-2.

Through in-depth research, the inventors found that Compound 1-1 and Compound 1-2 have lower viscosity, therefore, the effect of improving the conductivity of the electrolyte solution is more obvious, thereby enabling the battery to have better fast charging performance.

In some embodiments, based on the total mass of the organic solvent, the mass percentage w1 of the first organic solvent is in the range of 20% to 80%. For example, w1 can range from 25% to 80%, 25% to 75%, 30% to 70%, 30% to 60%, 35% to 65%, 35% to 60%, 40% to 60%, or 50% to 60%. Taking into full account the effect of the first organic solvent on the improvement of the conductivity of the electrolyte solution and its negative impact on the cycling performance and storage performance of the battery, the inventors controlled the mass percentage of the first organic solvent within an appropriate range, which can improve the fast charging performance of the battery while ensuring the good cycling performance and storage performance of the battery.

In some embodiments, in Formula 2A, $R_{21}$, $R_{22}$, $R_{23}$, $R_{24}$ are not alll single bonds. Optionally, one or both of $R_{21}$ and $R_{22}$ are methylene, and one or both of $R_{23}$ and $R_{24}$ are methylene.

In some embodiments, $R_{21}$ and $R_{23}$ are methylene, and $R_{22}$ and $R_{24}$ are single bonds.

In some embodiments, $R_{21}$ and $R_{23}$ are methylene, one of $R_{22}$ and $R_{24}$ is methylene, and the rest are single bonds.

In some embodiments, $R_{21}$, $R_{22}$, $R_{23}$, $R_{24}$ are all methylene.

In some embodiments, in Formula 2B, $R_{31}$, $R_{32}$, $R_{33}$, and $R_{34}$ are each independently one of a single bond and methylene, and $R_{31}$, $R_{32}$, $R_{33}$, and $R_{34}$ are not all single bonds.

In some embodiments, in Formula 2B, at least two of $R_{31}$, $R_{32}$, $R_{33}$, $R_{34}$ are methylene.

In some embodiments, in Formula 2B, $R_4$ may be one of a single bond, -O-, methylene, ethylene, propylene, fluoromethylene, fluoroethylene, fluoropropylene, methyleneoxy, ethyleneoxy and propyleneoxy. Optionally, $R_4$ is one of a single bond, methylene, ethylene and propylene. These substituents may have a linear structure or a branched structure. The number of fluorine atoms may be one or more.

Whe these substituents are within the above range, the first additive can form a dense and stable interfacial film on the surfaces of the positive electrode active material and the negative electrode active material, which blocks the direct contact of the first organic solvent with the positive electrode active material and the negative electrode active material, reduce the loss of active lithium, and thus can further improve the reversibility of intercalation and deintercalation of active ions between the positive and negative electrode sheets and improve the discharge capacity and cycling performance of the battery.

In some embodiments, when $R_4$ is a single bond, one or both of $R_{31}$ and $R_{32}$ are methylene, and the rest are single

bonds.

In some embodiments, when $R_4$ is a single bond, one or both of $R_{33}$ and $R_{34}$ are methylene, and the rest are single bonds.

In some embodiments, when $R_4$ is a single bond, one of $R_{31}$ and $R_{32}$ is methylene, one of $R_{33}$ and $R_{34}$ is methylene, and the rest are single bonds.

In some embodiments, when $R_4$ is a single bond, $R_{31}$ and $R_{32}$ are both methylene, one of $R_{33}$ and $R_{34}$ is methylene, and the rest are single bonds.

In some embodiments, when $R_4$ is a single bond, $R_{33}$ and $R_{34}$ are both methylene, one of $R_{31}$ and $R_{32}$ is methylene, and the rest are single bonds.

In some embodiments, when $R_4$ is a single bond, $R_{31}$, $R_{32}$, $R_{33}$ and $R_{34}$ are all methylene.

In some embodiments, the first additive may be selected from one or more of the following compounds:

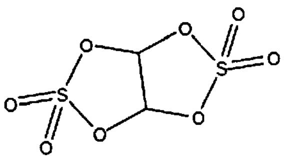 Compound 2-1, 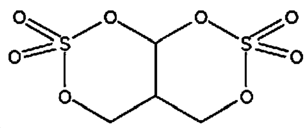 Compound 2-2,

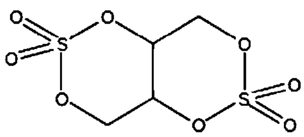 Compound 2-3, 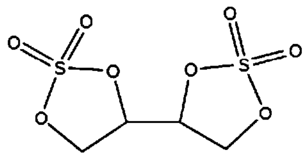 Compound 2-4,

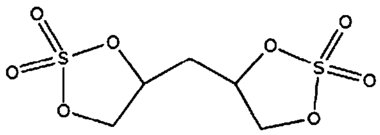 Compound 2-5, 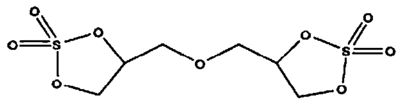 Compound 2-6,

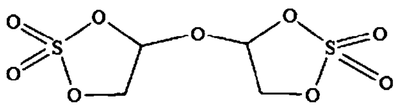 Compound 2-7, 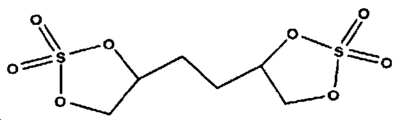 Compound 2-8.

The inventors found that by using one or more of the above compounds as the first additive, a more stable and durable interfacial film can be formed on the surfaces of the positive electrode active material and the negative electrode active material; the direct contact between the organic solvent (especially the first organic solvent) and the positive electrode active material and the negative electrode active material can be effectively prevented by the interfacial film even after a long period of charge and discharge, and therefore, the cycling performance and storage performance of the battery can be further improved.

In some embodiments, the first additive is selected from one or more of the following compounds:

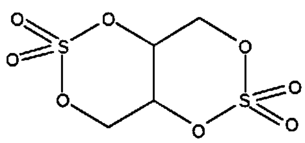 Compound 2-3, 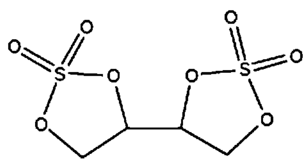 Compound 2-4,

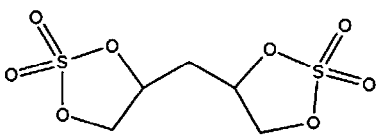 Compound 2-5, 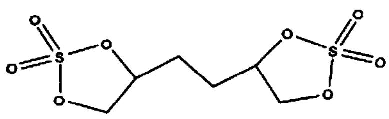 Compound 2-8.

In some embodiments, the first additive is selected from one or two of the following compounds:

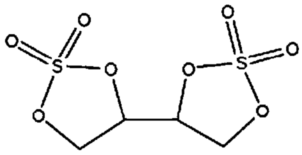 Compound 2-4, 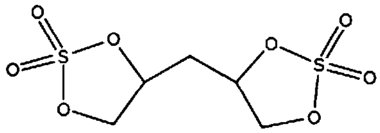 Compound 2-5.

In some embodiments, based on the total mass of the electrolyte solution, the mass percentage w2 of the first additive may be ≤10%. For example, w2 can range from 0.05% to 10%, 0.1% to 10%, 0.5% to 10%, 0.5% to 8%, 0.5% to 5%, 1% to 5%, or 2% to 5%. When the mass percentage of the first additive is in an appropriate range, the synergistic effect of the first additive and the first organic solvent can be fully exerted. If the mass percentage of the first additive is too large, the thickness of the film formed on the surface of the negative electrode active material will be large, which will affect the transmission rate of active ions at the negative electrode interface, and may not significantly improve the fast charging performance of the battery; if the mass percentage of the first additive is too small, the continuous reaction between the first organic solvent and the negative electrode cannot be effectively suppressed, which may not significantly improve the cycling performance and storage performance of the battery. Through creative work, the inventors have determined the mass percentage range of the first additive, which enables the battery to have good fast charging performance, cycling performance and storage performance.

In some embodiments, the additive may further comprise a second additive. The second additive may comprise one or more of cyclic carbonate compounds containing an unsaturated bond, halogen-substituted cyclic carbonate compounds, sulfate compounds, sulfite compounds, sultone compounds, disulfonic acid compounds, nitrile compounds, aromatic compounds, isocyanate compounds, phosphazene compounds, cyclic acid anhydride compounds, phosphite compounds, phosphate compounds, borate compounds, and carboxylate compounds. These second additives can form a denser and more stable interfacial film on the surface of the positive electrode active material and/or the negative electrode active material, which helps to further improve the cycling performance and storage performance of the battery.

In some embodiments, the second additive may comprise one or more of the following compounds:

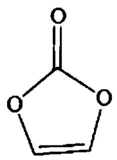 Compound 3-1, 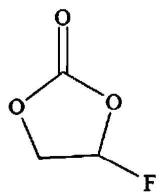 Compound 3-2.

When the second additive comprises one or both of the above two compounds, the cycling performance and storage performance of the battery can be further enhanced.

In some embodiments, based on the total mass of the electrolyte solution, the mass percentage w3 of the second additive may be ≤10%. For example, w3 may be ≤9%, ≤8%, ≤7%, ≤6%, ≤5%, ≤4%, ≤3%, ≤2%, or ≤1%.

In some embodiments, based on the total mass of the electrolyte solution, the mass percentage w3 of the second additive may be 1% to 10%, 1% to 8%, 1% to 7%, 1% to 5%, 1% to 4%, 1% to 3%, or 1% to 2%.

The mass percentage of the second additive is within an appropriate range, which can further enhance the cycling performance and storage performance of the battery.

In some embodiments, the organic solvent may further comprise a second organic solvent, and the second organic solvent may comprise one or more of cyclic carbonate compounds and chain carbonate compounds. Optionally, the second organic solvent may comprise a cyclic carbonate compound, or a combination of a cyclic carbonate compound and a chain carbonate compound.

The type of the chain carbonate compound and cyclic carbonate compound is not particularly limited in the present application, and can be selected according to actual needs. In some embodiments, the second organic solvent may comprise one or more of ethylene carbonate (EC), propylene carbonate (PC), 1,2- butene carbonate (BC), dimethyl carbonate (DMC), methyl ethyl carbonate (EMC), diethyl carbonate (DEC), dipropyl carbonate (DPC), methyl propyl carbonate (MPC), and ethyl propyl carbonate (EPC). When the organic solvent of the present application further comprises these second organic solvents, the battery can have good fast charging performance.

In some embodiments, based on the total mass of the organic solvent, the mass percentage of the second organic solvent may be in the range of 20% to 80%. Optionally, the mass percentage of the second organic solvent ranges from 20% to 75%, 25% to 75%, 30% to 70%, 40% to 70%, 35% to 65%, 40% to 65%, 40% to 60%, or 40% to 50%.

In some embodiments, based on the total mass of the organic solvent, the mass percentage w4 of the cyclic

carbonate compound may be in the range of 20% to 80%. For example, w4 may range from 20% to 50%, 25% to 50%, 25% to 45%, 25% to 40%, 25% to 35%, 30% to 50%, 30% to 45%, or 30% to 40%.

Cyclic carbonate compounds have higher dielectric constants, which is favorable for the dissociation of lithium salts. When the mass percentage of the cyclic carbonate compound is controlled in an appropriate range, it enables the battery containing the electrolyte solution to have more excellent fast charging performance.

In some embodiments, based on the total mass of the organic solvent, the mass percentage of the chain carbonate compound may range from 0% to 50%, 0% to 40%, 0% to 30%, 0% to 25%, 0% to 20%, 10% to 50%, 10% to 40%, 10% to 30%, or 10% to 20%.

In some embodiments, the electrolyte solution further comprises a lithium salt. The type of the lithium salt is not particularly limited in the present application, and can be selected according to actual needs. As an example, the lithium salt may comprise one or more of $LiN(C_xF_{2x+1}SO_2)(C_yF_{2y+1}SO_2)$, $LiPF_6$, $LiBF_4$, LiBOB, LiDFOB, $LiPO_2F_2$, LiDFOP, LiTFOP, $LiAsF_6$, $Li(FSO_2)_2N$, $LiCF_3SO_3$ and $LiClO_4$, wherein x and y are positive integers. When the above-mentioned lithium salt is comprised in the electrolyte solution, it can help to form a uniform, dense and low-impedance interfacial film on the surface of the negative electrode active material, and effectively improve the fast charging performance and cycling performance of the battery.

In some embodiments, the conductivity of the electrolyte solution can satisfy ≥12mS/cm. For example, the conductivity of the electrolyte solution can satisfy ≥12mS/cm, ≥13mS/cm, ≥14mS/cm, ≥15mS/cm, ≥16mS/cm, ≥17mS/cm, ≥18mS/cm, ≥19mS/cm, or ≥20mS/cm.

When the conductivity of the electrolyte solution is in an appropriate range, it enables the battery to have good fast charging performance, cycling performance, storage performance and safety performance.

In some embodiments, the conductivity of the electrolyte solution may be 12mS/cm to 24mS/cm. For example, the conductivity of the electrolyte solution may be 12mS/cm to 23mS/cm, 12mS/cm to 22mS/cm, 12mS/cm to 21mS/cm, 12mS/cm to 20mS/cm, or 13mS/cm to 20mS/cm.

[Negative electrode sheet]

The secondary battery comprises a negative electrode sheet, and the negative electrode sheet generally comprises a negative electrode current collector and a negative electrode film layer provided on at least one surface of the negative electrode current collector and comprising a negative electrode active material.

The ratio H/Dv50 of the thickness H of the single-sided negative electrode film layer to the volume average particle size Dv50 of the negative electrode active material can be used to characterize the number of longitudinal particles per unit negative electrode film layer.

The inventors found that the greater the number of longitudinal particles per unit negative electrode film layer containing negative electrode active materials, the higher the diffusion coefficient of active ions, and the better the fast charging performance of the battery; however, the greater the number of the longitudinal particles containing negative electrode active materials per unit negative electrode film layer is, the larger the contact area between the negative electrode film layer and the electrolyte solution is, and the more the side reactions of the electrolyte solution on the surface of the negative electrode active material particles are, which will affect the cycling performance and storage performance of the battery to a certain extent. Conversely, the smaller the number of longitudinal particles per unit of negative electrode film layer containing negative electrode active materials, the poorer the fast charging performance of the battery, while the cycling performance and storage performance of the battery are improved.

The inventors have conducted a lot of research and selected a suitable range for H/Dv50. Specifically, in the negative electrode sheet of the secondary battery of the present application, the ratio H/Dv50 of the thickness H of the single-sided negative electrode film layer to the volume average particle size Dv50 of the negative electrode active material satisfies ≥3. For example, H/Dv50 satisfies ≥4, ≥5, ≥6, ≥7, ≥8, or ≥9. The value of H/Dv50 is in an appropriate range, which can further improve the fast charging performance of the secondary battery on the basis of ensuring that the secondary battery has a higher volumetric energy density.

In some embodiments, the ratio H/Dv50 of the thickness H of the single-sided negative electrode film layer to the volume average particle size Dv50 of the negative electrode active material satisfies 4≤H/Dv50≤9. The ratio H/Dv50 of the thickness H of the single-sided negative electrode film layer to the volume average particle size Dv50 of the negative electrode active material is limited to an appropriate range, which, combined with the electrolyte solution of the present application, can provide secondary batteries with excellent fast charging performance, long service life and high energy density.

In some embodiments, the thickness H of the single-sided negative electrode film layer may satisfy ≥60μm. Optionally, the thickness of the single-sided negative electrode film layer may satisfy ≥65μm. More specifically, the thickness H of the single-sided negative electrode film layer may satisfy ≥70μm. The thickness H of the single-sided negative electrode film layer is controlled in an appropriate range, which can further improve the energy density of the battery.

In some embodiments, the volume average particle size Dv50 of the negative electrode active material may satisfy ≤18μm. Optionally, the volume average particle size Dv50 of the negative electrode active material may satisfy 14μm≤Dv50≤18μm. When the thickness H of the single-sided negative electrode film layer is constant, the smaller the volume average particle size Dv50 of the negative electrode active material, the higher the diffusion coefficient of active ions; however, the volume average particle size Dv50 of the negative electrode active material should not be too small, otherwise it will increase the contact area between the negative electrode film layer and the electrolyte solution, thereby affecting the cycling performance and storage performance of the battery. The volume average particle size Dv50 of the negative electrode active material is in a suitable range, which can not only improve the diffusion coefficient of active ions, but also reduce the contact area between the negative electrode film layer and the electrolyte solution. Therefore, the battery can have good fast charging performance, cycling performance and storage performance.

In some embodiments, the compaction density of the negative electrode film layer is 1.4g/cm$^3$ to 1.85g/cm$^3$. Optionally, the compaction density of the negative electrode film layer is 1.6g/cm$^3$ to 1.8g/cm$^3$. The compaction density of the negative electrode film layer is controlled within an appropriate range, so that the negative electrode active material particles in the negative electrode film layer can be in close contact, and the content of the negative electrode active material per unit volume can be increased, thereby increasing the energy density of the battery.

In the secondary battery of the present application, the type of the negative electrode active material is not particularly limited, and well-known negative electrode active materials for secondary batteries in the art can be used. As an example, the negative electrode active material may comprise one or more of graphite, soft carbon, hard carbon, mesocarbon microbeads, carbon fibers, carbon nanotubes, silicon-based materials, tin-based materials, and lithium titanate. The silicon-based material may be selected from one or more of elemental silicon, silicon oxide, silicon-carbon composite, silicon-nitrogen composite, and silicon alloy. The tin-based material may comprise one or more of elemental tin, tin oxide, and tin alloy. The present application is not limited to these materials, and other conventionally known materials that can be used as negative electrode active materials for secondary batteries can also be used. These negative electrode active materials may be used alone or in combination of two or more.

In the secondary battery of the present application, the negative electrode film layer generally comprises a negative electrode active material, an optional binder, an optional conductive agent and other optional auxiliaries. The negative electrode film layer is usually formed by coating a negative electrode slurry on the negative electrode current collector, followed by drying and cold pressing. The negative electrode slurry is generally formed by dispersing the negative electrode active material, the optional conductive agent, the optional binder, and other optional auxiliaries in a solvent and sufficiently stirring the mixture. The solvent may be N-methyl pyrrolidone (NMP) or deionized water, but is not limited thereto. Among others, the type and content of the conductive agent and the binder are not particularly limited, and can be selected according to the actual needs. By way of example, the conductive agent may comprise one or more of superconducting carbon, carbon black (such as acetylene black and Ketjen black), carbon dot, carbon nanotube, graphene, and carbon nanofiber. By way of example, the binder may comprise one or more of styrene butadiene rubber (SBR), water-soluble unsaturated resin SR-1B, water-based acrylic resin (such as polyacrylic acid (PAA), polymethacrylic acid (PMAA), and sodium polyacrylate (PAAS)), polyacrylamide (PAM), polyvinyl alcohol (PVA), sodium alginate (SA) and carboxymethyl chitosan (CMCS). Other optional auxiliaries may comprise thickeners (e. g., sodium carboxymethyl cellulose (CMC-Na)), PTC thermistor material and the like.

In the secondary battery of the present application, the negative electrode film layer may be provided on one side of the negative electrode current collector, or may be provided on both sides of the negative electrode current collector. For example, the negative electrode current collector has two opposite sides in the direction of its own thickness, and the negative electrode film layer is provided on either or both of the two opposite sides of the negative electrode current collector.

In the secondary battery of the present application, the type of the negative electrode current collector is not particularly limited, and can be selected according to actual needs.

In the secondary battery of the present application, the negative electrode current collector can be a metal foil or a composite current collector. As an example of a metal foil, a copper foil can be used as the negative electrode current collector. The composite current collector may comprise a high molecular material substrate layer and a metal material layer formed on at least one surface of the high molecular material substrate layer. As an example, the metal material may be selected from one or more of copper, copper alloy, nickel, nickel alloy, titanium, titanium alloy, silver, and silver alloy. As an example, the high molecular material substrate layer may be selected from, for example, polypropylene (PP), polyethylene terephthalate (PET), polybutylene terephthalate (PBT), polystyrene (PS), and polyethylene (PE).

It should be noted that the parameters (such as thickness, compaction density) of the negative electrode film layer given in the present application all refer to the parameters of the negative electrode film layer on a single side of the negative electrode current collector. When the negative electrode film layer is arranged on both sides of the negative electrode current collector, as long as the parameters of the negative electrode film layer on either side satisfy the present application, it is considered to fall within the protection scope of the present application. In addition, the ranges of the thickness and compaction density, for example, of the negative electrode film layer according to the present application all

refer to the corresponding parameters of the negative electrode film layer used for assembling the battery after cold pressing and compaction.

In addition, in the secondary battery of the present application, the negative electrode sheet does not exclude other additional functional layers other than the negative electrode film layer. For example, in some embodiments, the negative electrode sheet described in the present application may further comprise a conductive primer coating (e.g., composed of a conductive agent and a binder) disposed between the negative electrode current collector and the negative electrode film layer. In some other embodiments, the negative electrode sheet of the present application further comprises a protective layer covering the surface of the negative electrode film layer.

In the present application, the volume average particle size Dv50 of the negative electrode active material is the particle size corresponding to the cumulative volume distribution percentage of the negative electrode active material reaching 50%, which can be determined by laser diffraction particle size analysis. For example, it is determined by using a laser particle size analyzer (such as Malvern Master Size 3000) with reference to the standard GB/T 19077.1-2016.

In the present application, the thickness of the negative electrode film layer has a meaning well-known in the art, and can be tested by methods known in the art, such as using a micrometer (e.g., Mitutoyo 293-100, with an accuracy of 0.1$\mu$m).

In the present application, the compaction density of the negative electrode film layer has a meaning well-known in the art, and can be tested by methods known in the art. The compaction density of the negative electrode film layer = areal density of the negative electrode film layer/thickness of the negative electrode film layer. Among others, the areal density of the negative electrode film layer has a meaning well-known in the art, and can be tested by methods known in the art. For example, a single-sided coated and cold-pressed negative electrode sheet (if it is a double-sided coated negative electrode sheet, the negative electrode film layer on one side of the negative electrode sheet can be wiped off first), and punched into small disks with an area of S1, the weight of the disk is weighed and recorded as $M_1$; then, the negative electrode film layer of the above weighted negative electrode sheet is wiped off, the weight of the negative electrode current collector is weighed, and recorded as $M_0$; the areal density of the negative electrode film layer=(weight $M_1$ of the negative electrode sheet - weight $M_0$) of the negative electrode current collector/$S_1$.

It should be noted that in the above tests of the parameters of the negative electrode film layer or negative electrode active material, samples can be taken for testing during the battery preparation process, or can be taken for testing from the prepared secondary battery.

When the above-mentioned test sample is sampled from the prepared secondary battery, as an example, the sampling can be performed in the following steps (1) to (3).

(1) The secondary battery is discharged (for safety reasons, the battery is generally fully discharged); the battery is disassembled, the negative electrode sheet is taken out and soaked in dimethyl carbonate (DMC) for a certain period of time (such as, 2-10h); then, the negative electrode sheet is taken out and dried at a certain temperature for a certain period of time (such as, 60°C, 4h), and thereafter, the dried negative electrode sheet is taken out. At this point, samples can be taken from the dried negative electrode sheet to test for the parameters related to the negative electrode film layer described above in the present application. (2) The dried negative electrode sheet in step (1) is baked at a certain temperature for a certain period of time (for example, 400°C for 2 h), and any region in the baked negative electrode sheet is selected for sampling the negative electrode active material (the sample can be taken by scraping using a blade to obtain sample powder). (3) The negative electrode active material collected in step (2) is subjected to sieving treatment (for example, sieving with a 200-mesh sieve), and finally a sample that can be used to test for the above-mentioned parameters of the negative electrode active material in the present application is obtained.

[Positive electrode sheet]

In the secondary battery of the present application, the positive electrode sheet comprises a positive electrode current collector and a positive electrode film layer provided on at least one surface of the positive electrode current collector and comprising a positive electrode active material. For example, the positive electrode current collector has two opposite surfaces in the direction of its own thickness, and the positive electrode film layer is provided on either or both of the two opposite surfaces of the positive electrode current collector.

In some embodiments, the positive electrode active material may comprise one or more of lithium transition metal oxides, olivine-structured lithium-containing phosphates, and their respective modified compounds. In the secondary battery of the present application, the above-mentioned modified compounds of the positive electrode active materials may be obtained by modifying the positive electrode active material by doping, surface coating, or both surface coating and doping.

As an example, the lithium transition metal oxide may comprise one or more of lithium-cobalt oxide, lithium-nickel oxide, lithium-manganese oxide, lithium-nickel-cobalt oxide, lithium-manganese-cobalt oxide, lithium-nickel-manganese oxide, lithium-nickel-cobalt-manganese oxide, lithium-nickel-cobalt-aluminum oxide and modified compounds thereof. As an example, the olivine-structured lithium-containing phosphate may comprise one or more of lithium iron phosphate,

composite materials of lithium iron phosphate and carbon, lithium manganese phosphate, composite materials of lithium manganese phosphate and carbon, lithium manganese iron phosphate, composite materials of lithium manganese iron phosphate and carbon, and their modified compounds. These positive electrode active materials may each be used alone or in combination of two or more of them.

In some embodiments, the positive electrode active material may comprise one or more of olivine-structured lithium-containing phosphates, and their modified compounds. In some other embodiments, the positive electrode active material may be one or more of olivine-structured lithium-containing phosphates, and their modified compounds. The use of these positive electrode active materials in the positive electrode film layer may improve the battery's rate performance while improving the battery's cycling performance and storage performance. The working voltage of the battery using these positive electrode active materials is not high, generally ≤4.3V, and within this voltage range, the first organic solvent and the first additive used together provide better effect, so the cycling performance and storage performance of the battery can be further improved.

In the secondary battery of the present application, the positive electrode film layer generally comprises a positive electrode active material, an optional binder, and an optional conductive agent. The positive electrode film layer is usually formed by coating a positive electrode slurry on the positive electrode current collector, followed by drying and cold pressing. The positive electrode slurry is generally formed by dispersing the positive electrode active material, the optional conductive agent, the optional binder and any other components in a solvent and sufficiently stirring the mixture. The solvent may be N-methyl pyrrolidone (NMP), but is not limited thereto. The type and content of the conductive agent and the binder are not particularly limited, and can be selected according to the actual needs. As an example, the binder may comprise one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer and fluorine-containing acrylate resin. As an example, the conductive agent may comprise one or more of superconducting carbon, acetylene black, carbon black, Ketjen black, carbon dot, carbon nanotube, graphene, and carbon nanofiber.

In the secondary battery of the present application, the positive electrode current collector can be a metal foil or a composite current collector. As an example of a metal foil, an aluminum foil can be used as the positive electrode current collector. The composite current collector may comprise a high molecular material substrate layer and a metal material layer formed on at least one surface of the high molecular material substrate layer. As an example, the metal material may be selected from one or more of aluminum, aluminum alloy, nickel, nickel alloy, titanium, titanium alloy, silver, and silver alloy. As an example, the high molecular material substrate layer may be selected from, for example, polypropylene, polyethylene terephthalate, polybutylene terephthalate, polystyrene, and polyethylene.

[Separator]

The secondary battery of the present application further comprises a separator. The separator is provided between the positive electrode sheet and the negative electrode sheet, and functions to separate. The type of the separator is not particularly limited, and any well-known separator with a porous structure having good chemical stability and mechanical stability may be selected. In some embodiments, the material of the separator may be selected from one or more of glass fiber, non-woven cloth, polyethylene, polypropylene, and polyvinylidene fluoride, but is not limited thereto. The separator may be a single-layer film or a multi-layer composite film. When the separator is a multi-layer composite film, the materials of the layers may be the same or different. In some embodiments, a ceramic coating or a metal oxide coating may be further provided on the separator.

In some embodiments, the positive electrode sheet, the negative electrode sheet, and the separator can be made into an electrode assembly by a winding process or a lamination process.

In some embodiments, the secondary battery may comprise an outer package. The outer package can be used to encapsulate the above-mentioned electrode assembly and electrolyte solution.

In some embodiments, the outer package of the secondary battery may be a hard case, such as a hard plastic case, an aluminum case, and a steel case. The outer package of the secondary battery can also be a pouch, such as a bag-type pouch. The material of the pouch can be a plastic, such as one or more of polypropylene, polybutylene terephthalate (PBT) and polybutylene succinate (PBS).

The shape of the secondary battery is not particularly limited in the present application, and may be cylindrical, square or of any other shapes. For example, Fig. 1 is an example of secondary battery 5 having a square structure.

In some embodiments, referring to Fig. 2, the outer package may comprise a case 51 and a cover plate 53. Here, the case 51 may comprise a bottom plate and a side plate connected to the bottom plate, with the bottom plate and the side plate enclosing together to form an accommodating cavity. The case 51 has an opening that communicates with the accommodating cavity, and the cover plate 53 is used to cover the opening to close the accommodating cavity. The positive electrode sheet, the negative electrode sheet, and the separator may be formed into an electrode assembly 52 by a winding process or a lamination process. The electrode assembly 52 is encapsulated within the accommodating cavity.

The electrolyte solution impregnates the electrode assembly 52. The number of electrode assemblies 52 contained in the secondary battery 5 can be one or more, and can be adjusted according to needs.

In some embodiments, secondary batteries may be assembled into a battery module, a plurality of secondary batteries may be contained in the battery module, and the specific number of secondary batteries can be adjusted according to the application and capacity of the battery module.

Fig. 3 is an example of battery module 4. Referring to Fig. 3, in the battery module 4, a plurality of secondary batteries 5 can be sequentially arranged along the length direction of the battery module 4. Of course, any other arrangement is also possible. The plurality of secondary batteries 5 may be further fixed by fasteners.

Optionally, the battery module 4 may further comprise a shell having an accommodating space, in which the plurality of secondary batteries 5 are accommodated.

In some embodiments, the above-mentioned battery modules can further be assembled into a battery pack, and the number of battery modules contained in the battery pack can be adjusted according to the application and capacity of the battery pack.

Figs. 4 and 5 are an example of battery pack 1. Referring to Figs. 4 and 5, the battery pack 1 may comprise a battery box and a plurality of battery modules 4 provided in the battery box. The battery box comprises an upper box 2 and a lower box 3, wherein the upper box 2 is used to cover the lower box 3 to form an enclosed space for accommodating the battery modules 4. The plurality of battery modules 4 can be arranged in the battery box in any way.

## Powered device

A second aspect of the present application provides a powered device comprising at least one of the secondary battery, the battery module, or the battery pack of the present application. The secondary battery, battery module, or battery pack can be used as a power source for the powered device, and can also be used as an energy storage unit for the powered device. The powered device may be, but is not limited to, a mobile device (such as a mobile phone, a laptop), an electric vehicle (such as an all-electric vehicle, a hybrid electric vehicle, a plug-in hybrid electric vehicle, an electric bicycle, an electric scooter, an electric golf cart, an electric truck), an electric train, a ship, a satellite, an energy storage system, etc.

For the powered device, the secondary battery, the battery module, or the battery pack can be selected according to its use requirements.

Fig. 6 is an example of a powered device. The powered device is an all-electric vehicle, a hybrid electric vehicle, or a plug-in hybrid electric vehicle, etc. In order to meet the requirements of the powered device for high power and high energy density, a battery pack or a battery module may be used.

By way of another example, the powered device may be a mobile phone, a tablet computer, a laptop, etc. The powered device is generally required to be light and thin, and may use a secondary battery as a power source.

## Examples

The following examples describe the disclosure of the present application in more detail and are provided for illustrative purposes only, as various modifications and changes within the scope of the disclosure of the present application will be apparent to those skilled in the art. Unless otherwise stated, all parts, percentages, and ratios reported in the following examples are based on mass, all reagents used in the examples are either commercially available or synthesized according to conventional methods, and can be directly used without further processing, and all the instruments used in the examples are commercially available.

In the following examples and comparative examples, the artificial graphite, the conductive agent acetylene black, the binder styrene-butadiene rubber (SBR), and the thickener sodium carboxymethyl cellulose (CMC-Na) used in the negative electrode sheet are all commercially available. The positive electrode active material lithium iron phosphate, the binder polyvinylidene fluoride (PVDF), the conductive agent acetylene black, and the solvent N-methyl pyrrolidone (NMP) used in the positive electrode sheet are all commercially available. The $LiPF_6$, the first organic solvent, the second organic solvent, the first additive, the second additive, and ethylene sulfate (DTD) used in the electrolyte solution are all commercially available. The polypropylene film used for the separator is commercially available.

### Example 1

Preparation of negative electrode sheet

The negative electrode active materials artificial graphite, conductive agent acetylene black, binder styrene-butadiene rubber (SBR), thickener sodium carboxymethyl cellulose (CMC-Na) in a mass ratio of 95:2:2:1 were dissolved in the solvent deionized water, sufficiently stirred and mixed to prepare a negative electrode slurry; the negative electrode slurry was uniformly coated on the negative electrode current collector copper foil, and then oven dried, cold pressed, and

slit to obtain the negative electrode sheet.

Preparation of positive electrode sheet

The positive electrode active material lithium iron phosphate, binder polyvinylidene fluoride (PVDF) and conductive agent acetylene black in a mass ratio of 97:2:1 were dissolved in solvent N- methylpyrrolidone (NMP), sufficiently stirred and mixed to prepare a positive electrode slurry; the positive electrode slurry was uniformly coated on the positive electrode current collector aluminum foil, and then oven dried, cold pressed, and slit to obtain the positive electrode sheet.

Preparation of electrolyte solution

In an argon atmosphere glove box ($H_2O$ content < 0.1ppm, $O_2$ content < 0.1ppm), compound 1-2, ethylene carbonate (EC), and methyl ethyl carbonate (EMC) in a mass ratio of 30:30:40 were sufficiently mixed to prepare an organic solvent; a certain amount of $LiPF_6$ and a certain amount of compound 2-4 were dissolved in the above organic solvent, and sufficiently stirred to obtain an electrolyte solution. Here, the mass percentage of compound 2-4 in the electrolyte solution was 2%, and the conductivity of the electrolyte solution was 13.5mS/cm.

Separator

A polypropylene film was used as the separator.

Preparation of secondary battery

The positive electrode sheet, the separator and the negative electrode sheet were stacked in order, so that the separator was positioned between the positive electrode sheet and the negative electrode sheet to separate them, and then they were wound to obtain an electrode assembly; the electrode assembly was put into an outer package and dried, and then the electrolyte solution was injected thereto; thereafter, the secondary battery was obtained through processes such as chemical formation and standing. The secondary battery had a length of 194mm, a width of 70mm and a height of 112mm.

**Examples 2 to 26 and Comparative Examples 1 to 3**

The preparation methods of Examples 2 to 26 and Comparative Examples 1 to 3 are similar to those of Example 1, except that the relevant parameters of the electrolyte solution are adjusted, and the specific electrolyte parameters are shown in Table 1. Here, the first additive used in the electrolyte solution of Comparative Example 3 is compound 2-9.

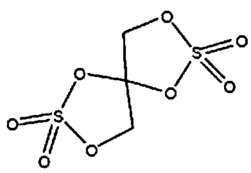

Compound 2-9

## Tests

(1) Test for battery fast charging performance

At 25°C, the batteries of the above examples and comparative examples were charged and discharged for the first time at a current of 0.33C (where 1C represents the current value at which the theoretical capacity of the battery is completely discharged within 1h). The specific steps comprise: the battery was charged at a constant current of 0.33C to a voltage of 3.65V, and then charged at a constant voltage of 3.65V until the current was ≤0.05C; the battery was allowed to stand for 5min, then discharged at a constant current of 0.33C to a voltage of 2.5V, and the actual discharge capacity of the battery was recorded as $C_0$.

The battery was charged at a constant current at different charging rates of $0.5C_0$, $0.8C_0$, $1.2C_0$, $1.5C_0$, $2.0C_0$, $2.5C_0$, $3.0C_0$, $4.0C_0$, $5.0C_0$ until the charge cut-off voltage of the battery reached 3.65V or the negative electrode potential dropped to 0V (whichever came first). After each charge, the battery needed to be discharged at $0.33C_0$ to a battery discharge cut-off voltage of 2.5V. Negative electrode potentials corresponding to charging the battery to 10%SOC, 20%SOC, 30%SOC, 40%SOC, 50%SOC, 60%SOC, 70%SOC, 80%SOC (SOC represents the state of charge of the battery) at different charging rates were recorded.

The curves of charge rate versus negative electrode potential under different states of charge were plotted, and linearly fit to obtain the corresponding charge rates when the negative electrode potential was 0V under different states of charge. The resulting charing rates are the charging windows under the respective states of charge. The charging windows under different states of charge were respectively denoted as $C_{10\%SOC}$, $C_{20\%SOC}$, $C_{30\%SOC}$, $C_{40\%SOC}$, $C_{50\%SOC}$, $C_{60\%SOC}$, $C_{70\%SOC}$, $C_{80\%SOC}$. According to the formula $(60/C_{20\%SOC} + 60/C_{30\%SOC} + 60/C_{40\%SOC} + 60/C_{50\%SOC} + 60/C_{60\%SOC} + 60/C_{70\%SOC} + 60/C_{80\%SOC})\times 10\%$, the charging time T for the battery to charge from 10%SOC to 80%SOC was calculated. The shorter the charging time T, the better the fast charging performance of the battery.

(2) Test for battery cycling performance at 60°C

At 60°C, the batteries of the above examples and comparative examples were charged at a constant current of 1C to a voltage of 3.65V, then charged at a constant voltage of 3.65V until the current was ≤0.05C, and then discharged at a constant current of 1C to a voltage of 2.5V, which is one charge and discharge cycle. The discharge capacity at this point was recorded as the discharge capacity of the battery at the first cycle. The charge and discharge cycles were repeated in this manner, and the capacity retention rate of the battery after 500 cycles was calculated.

The capacity retention rate (%) of the battery after 500 cycles at 60°C = (the discharge capacity of the battery at the 500th cycle/the discharge capacity of the battery at the first cycle) × 100%.

(3) Test for battery storage gas production at 60°C

At 25°C, the batteries of the above examples and comparative examples were charged at a constant current of 0.33C to a voltage of 3.65V, then charged at a constant voltage of 3.65V to a current ≤0.05C, and then discharged at a constant current of 0.33C to a voltage of 2.5V. The actual discharge capacity of the battery was recorded as $C_0$. At 25°C, the battery was further charged at a constant current of $0.33C_0$ to a voltage of 3.65V, and then charged at a constant voltage of 3.65V to a current of $\leq 0.05C_0$. At this point, the battery was fully charged, and the volume of the battery was measured and recorded as the volume of the battery before storage. The fully charged battery was stored in a thermostat at 60°C for 30 days, and then taken out from the thermostat and measured for volume.

The gas production (ml/Ah) of the battery stored at 60°C for 30 days = (the volume of the battery after 30 days of storage - the volume of the battery before storage)/the rated capacity of the battery.

(4) Test for battery storage capacity retention rate at 60°C

At 25°C, the batteries of the above examples and comparative examples were charged at a constant current of 0.33C to a voltage of 3.65V, then charged at a constant voltage of 3.65V to a current ≤0.05C; the battery was discharged at a constant current of 0.33C to a voltage of 2.5V. The actual discharge capacity of the battery was recorded as $C_0$. At 25°C, the battery was further charged at a constant current of $0.33C_0$ to a voltage of 3.65V, and then charged at a constant voltage of 3.65V to a current of $\leq 0.05C_0$. At this point, the battery was fully charged. The fully charged battery was stored in a thermostat at 60°C for 60 days, and the battery was then taken out for capacity testing.

The capacity retention rate of the battery after being stored at 60°C for 60 days=(the discharge capacity of the battery after being stored for 60 days/the actual discharge capacity of the battery $C_0$)×100%.

The electrolyte solution parameters of Examples 1 to 26 and Comparative Examples 1 to 3 are shown in Table 1, and the test results are shown in Table 2.

Table 1

| No. | The first organic solvent and its mass percentage w1 (%) | | The second organic solvent and its mass percentage (%) | | | | The first additive and its mass percentage w2 (%) | | The second additive and its mass percentage w3 (%) | | Electrolyte solution conductivity (mS/cm) |
|---|---|---|---|---|---|---|---|---|---|---|---|
| Example 1 | Compound 1-2 | 30 | EC | 30 | EMC | 40 | Compound 2-4 | 2 | / | / | 13.5 |
| Example 2 | Compound 1-2 | 30 | EC | 30 | DMC | 40 | Compound 2-4 | 2 | / | / | 15.3 |
| Example 3 | Compound 1-2 | 40 | EC | 30 | EMC | 30 | Compound 2-4 | 2 | / | / | 15.1 |
| Example 4 | Compound 1-2 | 50 | EC | 30 | EMC | 20 | Compound 2-4 | 2 | / | / | 16.7 |
| Example 5 | Compound 1-2 | 60 | EC | 30 | EMC | 10 | Compound 2-4 | 2 | / | / | 18.4 |
| Example 6 | Compound 1-2 | 20 | EC | 30 | EMC | 50 | Compound 2-4 | 2 | / | / | 11.9 |
| Example 7 | Compound 1-2 | 70 | EC | 30 | / | / | Compound 2-4 | 2 | / | / | 20.2 |
| Example 8 | Compound 1-2 | 80 | EC | 20 | / | / | Compound 2-4 | 2 | / | / | 21.8 |
| Example 9 | Compound 1-2 | 30 | EC | 30 | EMC | 40 | Compound 2-1 | 2 | / | / | 13.1 |
| Example 10 | Compound 1-2 | 30 | EC | 30 | EMC | 40 | Compound 2-2 | 2 | / | / | 13.2 |
| Example 11 | Compound 1-2 | 30 | EC | 30 | EMC | 40 | Compound 2-3 | 2 | / | / | 13.3 |
| Example 12 | Compound 1-2 | 30 | EC | 30 | EMC | 40 | Compound 2-5 | 2 | / | / | 13.4 |
| Example 13 | Compound 1-2 | 30 | EC | 30 | EMC | 40 | Compound 2-6 | 2 | / | / | 13.2 |
| Example 14 | Compound 1-2 | 30 | EC | 30 | EMC | 40 | Compound 2-7 | 2 | / | / | 13.1 |
| Example 15 | Compound 1-2 | 30 | EC | 30 | EMC | 40 | Compound 2-8 | 2 | / | / | 13.3 |
| Example 16 | Compound 1-1 | 60 | EC | 30 | EMC | 10 | Compound 2-4 | 2 | / | / | 14.5 |
| Example 17 | Compound 1-4 | 60 | EC | 30 | EMC | 10 | Compound 2-4 | 2 | / | / | 13.4 |
| Example 18 | Compound 1-6 | 60 | EC | 30 | EMC | 10 | Compound 2-4 | 2 | / | / | 17.1 |
| Example 19 | Compound 1-2 | 30 | EC | 30 | EMC | 40 | Compound 2-4 | 0.05 | Compound 3-1 | 2 | 13.7 |
| Example 20 | Compound 1-2 | 30 | EC | 30 | EMC | 40 | Compound 2-4 | 0.1 | Compound 3-1 | 2 | 13.6 |
| Example 21 | Compound 1-2 | 30 | EC | 30 | EMC | 40 | Compound 2-4 | 0.5 | Compound 3-1 | 2 | 13.6 |
| Example 22 | Compound 1-2 | 30 | EC | 30 | EMC | 40 | Compound 2-4 | 1 | Compound 3-1 | 2 | 13.5 |

(continued)

| No. | The first organic solvent and its mass percentage w1 (%) | | The second organic solvent and its mass percentage (%) | | | | The first additive and its mass percentage w2 (%) | | The second additive and its mass percentage w3 (%) | | Electrolyte solution conductivity (mS/cm) |
|---|---|---|---|---|---|---|---|---|---|---|---|
| Example 23 | Compound 1-2 | 30 | EC | 30 | EMC | 40 | Compound 2-4 | 2 | Compound 3-1 | 2 | 13.4 |
| Example 24 | Compound 1-2 | 30 | EC | 30 | EMC | 40 | Compound 2-4 | 5 | Compound 3-1 | 2 | 13.2 |
| Example 25 | Compound 1-2 | 30 | EC | 30 | EMC | 40 | Compound 2-4 | 10 | Compound 3-1 | 2 | 13.1 |
| Example 26 | Compound 1-2 | 30 | EC | 30 | EMC | 40 | Compound 2-4 | 11 | Compound 3-1 | 2 | 12.9 |
| Comparative Example 1 | Compound 1-2 | 30 | EC | 30 | EMC | 40 | / | / | / | / | 13.8 |
| Comparative Example 2 | Compound 1-2 | 30 | EC | 30 | EMC | 40 | / | / | DTD | 2 | 13.6 |
| Comparative Example 3 | Compound 1-2 | 30 | EC | 30 | EMC | 40 | Compound 2-9 | 2 | / | / | 13.3 |

Table 2

| No. | Charging time T (min) | Gas production (mL/Ah) after storage at 60°C for 30 days | Capacity retention rate after storage at 60°C for 60 days | Capacity retention rate after 500 cycles at 60°C |
|---|---|---|---|---|
| Example 1 | 30 | 1.5 | 90.5% | 88.4% |
| Example 2 | 27 | 1.6 | 90.3% | 88.2% |
| Example 3 | 27 | 1.9 | 89.9% | 87.5% |
| Example 4 | 25 | 2.4 | 89.0% | 86.6% |
| Example 5 | 23 | 2.8 | 88.4% | 85.5% |
| Example 6 | 42 | 1.5 | 90.4% | 88.4% |
| Example 7 | 20 | 3 | 87.5% | 84.6% |
| Example 8 | 18 | 5.0 | 80.5% | 79.0% |
| Example 9 | 34 | 2.5 | 82.6% | 80.1% |
| Example 10 | 33 | 2.0 | 85.6% | 83.2% |
| Example 11 | 32 | 1.7 | 88.9% | 86.7% |
| Example 12 | 31 | 1.6 | 90.3% | 88.3% |
| Example 13 | 32 | 1.6 | 85.6% | 83.4% |
| Example 14 | 33 | 2.2 | 83.5% | 80.9% |
| Example 15 | 32 | 1.8 | 88.5% | 86.1% |
| Example 16 | 37 | 1.6 | 89.5% | 86.5% |
| Example 17 | 40 | 1.8 | 88.4% | 85.3% |
| Example 18 | 35 | 2 | 86.4% | 82.6% |
| Example 19 | 40 | 5.1 | 80.6% | 78.4% |
| Example 20 | 38 | 4.5 | 83.5% | 81.4% |
| Example 21 | 34 | 3.3 | 85.7% | 83.8% |
| Example 22 | 30 | 1.5 | 90.5% | 88.8% |
| Example 23 | 25 | 1.5 | 92.6% | 90.4% |
| Example 24 | 29 | 1.4 | 90.7% | 88.4% |
| Example 25 | 38 | 1.3 | 83.5% | 81.4% |
| Example 26 | 40 | 1.2 | 80.3% | 78.3% |
| Comparative Example 1 | 42 | 11.3 | 63.2% | 60.5% |
| Comparative Example 2 | 38 | 7.9 | 72.7% | 69.5% |
| Comparative Example 3 | 35 | 3.0 | 80.1% | 77.8% |

It can be seen from the test results in Table 2 that the use of the first organic solvent in the electrolyte solution can improve the fast charging performance of the battery, but due to the poor compatibility between the first organic solvent and the negative electrode, the cycling performance and storage performance of the battery will be deteriorated, especially in the high temperature environment. From the test results of Comparative Example 2 and Comparative Example 1, it can be found that adding an appropriate amount of DTD to the electrolyte solution does not improve the cycling performance and storage performance of the battery. The main reason for this is as follows. DTD forms a stable interfacial film on the surface of both the positive electrode active material and the negative electrode active material, which inhibits the continuous reaction between the negative electrode and the first organic solvent. However, gases are produced during formation of the interfacial film by DTD, and the generated gases are enriched at the interface of the positive electrode sheet, the negative electrode sheet and the separator to form macroscopic bubbles, which will block the transport of lithium ions.

It can be seen from the test results in Table 2 that the batteries of Examples 1 to 26 can significantly improve the

cycling performance and storage performance of the battery, especially under high temperatures, by using the first additive to replace DTD. Also, the batteries of Examples 1 to 26 still maintain good fast charging performance.

From the comparison of the test results of Comparative Example 3 and Examples 1 to 26, it can be seen that the batteries of Examples 1 to 26 have more excellent cycling performance and storage performance.

It can be seen from the comparison of the test results of Examples 1 to 2 that, when the type of the second organic solvent is changed, the fast charging performance, cycling performance and storage performance of the battery will also change, but the changes are all within a reasonable range and are not too great. Therefore, the type of the second organic solvent is not specifically limited in the present application.

From the comparison of the test results of Example 1 and Examples 3 to 8, it can be seen that as the content of the first organic solvent increases, the charging time T of the battery decreases, the high-temperature storage gas production increases, the high-temperature storage capacity retention rate and the high-temperature cycling capacity retention rate decrease. The main reasons for this are as follows. After the content of the first organic solvent increases, the amount of $\alpha$-H increases, and the loss of active lithium inside the battery increases, so the capacity retention rate of the battery after high temperature storage decreases. Additionally, the first organic solvent has poor oxidation resistance and is prone to oxidative decomposition when stored in a high state of charge, so the gas production of the battery stored at high temperatures increases.

It can be seen from the comparison of the test results of Example 1 and Examples 9 to 15 that, when the type of the first additive is changed, the fast charging performance, cycling performance and storage performance of the battery also change, but the changes are all within a reasonable range and are not too great.

It can be seen from the comparison of the test results of Example 1 and Examples 16 to 18 that, when the type of the first organic solvent is changed, the fast charging performance, cycling performance and storage performance of the battery also change, but the changes are all within a reasonable range and are not too great.

From the comparison of the test results of Examples 19 to 26, it can be seen that when the content of the first additive increases, the gas production in the high-temperature storage of the battery decreases, the charging time of the battery first decreases and then increases, and the high-temperature storage capacity retention rate and the high-temperature cycling capacity retention rate of the battery first increase and then decrease. The possible reason is that the first additive has a higher reduction potential, and can form a dense and stable interfacial film of sulfur-containing organic matter on the surface of the negative electrode active material prior to the first organic solvent, which inhibits the continuous reaction between the first organic solvent and the negative electrode, and as a result, the gas production in the high temperature storage of the battery decreses. However, the first additive has a cyclic structure, and when its content increases, the thickness of the film formed on the surface of the negative electrode active material increases, and the film formation resistance increases slightly, which affects the transmission rate of lithium ions at the negative electrode interface. Therefore, the charging time of the battery will increase to a certain extent, and the high temperature storage capacity retention rate and high temperature cycling capacity retention rate of the battery will decrease to a certain extent.

**Example 27**

Preparation of negative electrode sheet

The negative electrode active materials artificial graphite (with a volume average particle size Dv50 of 17$\mu$m), conductive agent acetylene black, binder styrene-butadiene rubber (SBR), thickener sodium carboxymethyl cellulose (CMC-Na) in a mass ratio of 95:2:2:1 were dissolved in the solvent deionized water, sufficiently stirred and mixed to prepare a negative electrode slurry; the negative electrode slurry was uniformly coated on both surfaces of the negative electrode current collector copper foil, and then oven dried, cold pressed, and slit to obtain the negative electrode sheet. The negative electrode slurry was dried to form a negative electrode film layer, the thickness of the one-sided negative electrode film layer was 60$\mu$m, and the compaction density of the negative electrode film layer was 1.65g/cm$^3$.

Preparation of positive electrode sheet

The positive electrode active material lithium iron phosphate, binder polyvinylidene fluoride (PVDF) and conductive agent acetylene black in a mass ratio of 97:2:1 were dissolved in solvent N- methylpyrrolidone (NMP), sufficiently stirred and mixed to prepare a positive electrode slurry; the positive electrode slurry was uniformly coated on the positive electrode current collector aluminum foil, and then oven dried, cold pressed, and slit to obtain the positive electrode sheet.

Preparation of electrolyte solution

In an argon atmosphere glove box ($H_2O$ content < 0.1ppm, $O_2$ content < 0.1ppm), compound 1-2, ethylene

carbonate (EC), and methyl ethyl carbonate (EMC) in a mass ratio of 30:30:40 were sufficiently mixed to prepare an organic solvent; a certain amount of $LiPF_6$ and a certain amount of the first additive compound 2-4 were dissolved in the above organic solvent, and sufficiently stirred to obtain the electrolyte solution. Here, the mass percentage of compound 2-4 in the electrolyte solution was 2%, and the conductivity of the electrolyte solution was 13.5mS/cm.

Separator

A polypropylene film was used as the separator.

Preparation of secondary battery

The positive electrode sheet, the separator and the negative electrode sheet were stacked in order, so that the separator was positioned between the positive electrode sheet and the negative electrode sheet to separate them, and then they were wound to obtain an electrode assembly; the electrode assembly was put into an outer package and dried, and then the electrolyte solution was injected thereto; thereafter, the secondary battery was obtained through processes such as chemical formation and standing. The secondary battery had a length of 194mm, a width of 70mm and a height of 112mm.

**Examples 28 to 37**

The preparation methods of Examples 28 to 37 are similar to that of Example 27, except that the relevant parameters of the negative electrode sheet are adjusted, and the specific parameters are shown in Table 3.

**Tests**

(1) Test for battery volumetric energy density

At 25°C, the batteries of the above examples and comparative examples were charged at a constant current of 0.33C to a voltage of 3.65V, then charged at a constant voltage of 3.65V to a current ≤0.05C; the battery was discharged at a constant current of 0.33C to a voltage of 2.5V, and the discharge energy Q was obtained. The length, width and height of the battery shell were measured using a vernier caliper, and the volume V of the battery was obtained by calculation.
The volumetric energy density of the battery=discharge energy Q/the volume V of the battery; the unit of volumetric energy density is Wh/L.
The negative electrode sheet parameters and battery performance test results of Examples 27 to 37 are shown in Table 3.

Table 3

| No. | Thickness H (μm) of single-sided negative electrode film layer | Volume average particle size Dv50 (μm) of negative electrode active material | H/Dv50 | Charging time T (min) | Volumetric energy density (Wh/L) | Capacity retention rate after storage at 60°C for 60 days | Capacity retention rate after 500 cycles at 60°C |
|---|---|---|---|---|---|---|---|
| Example 27 | 60 | 17 | 3.5 | 28 | 400 | 90.4% | 88.2% |
| Example 28 | 70 | 17 | 4.1 | 30 | 412 | 90.5% | 88.4% |
| Example 29 | 80 | 17 | 4.7 | 32 | 431 | 89.9% | 87.3% |
| Example 30 | 100 | 17 | 5.9 | 36 | 442 | 87.5% | 85.1% |
| Example 31 | 120 | 17 | 7.1 | 38 | 456 | 85.2% | 83.2% |
| Example 32 | 120 | 18 | 6.7 | 40 | 458 | 86.6% | 84.3% |

(continued)

| No. | Thickness H (μm) of single-sided negative electrode film layer | Volume average particle size Dv50 (μm) of negative electrode active material | H/Dv50 | Charging time T (min) | Volumetric energy density (Wh/L) | Capacity retention rate after storage at 60°C for 60 days | Capacity retention rate after 500 cycles at 60°C |
|---|---|---|---|---|---|---|---|
| Example 33 | 120 | 16 | 7.5 | 36 | 455 | 84.2% | 82.0% |
| Example 34 | 120 | 15 | 8.0 | 33 | 453 | 83.4% | 81.1% |
| Example 35 | 120 | 14 | 8.8 | 31 | 452 | 82.5% | 80.2% |
| Example 36 | 50 | 17 | 2.9 | 25 | 384 | 90.3% | 88.3% |
| Example 37 | 120 | 13 | 9.2 | 28 | 450 | 79.3% | 77.2% |

It can be seen from the test results in Table 3 that with the increase of the thickness H of the single-sided negative electrode film layer, the volumetric energy density of the battery increases, but the charging time T is prolonged. When the thickness H of the single-sided negative electrode film layer is constant, with the decrease of the volume average particle size Dv50 of the negative electrode active material, the diffusion path of the active ions is shortened, and the charging time T decreases; however, the volume average particle size Dv50 of the negative electrode active material should also not be too small, otherwise the contact area between the negative electrode film layer and the electrolyte solution will increase, and the side reactions of the electrolyte on the surface of the negative electrode active material particles will increase, thus affecting the cycling performance and storage performance of the battery. Therefore, the ratio H/Dv50 of the thickness of the single-sided negative electrode film layer to the volume average particle size Dv50 of the negative electrode active material is limited to an appropriate range, which, combined with the electrolyte solution of the present application, can provide batteries with good fast charging performance, long service life and high energy density.
Further embodiments of the present invention are provided in the following. It should be noted that the numbering used in the following section does not necessarily need to comply with the numbering used in the previous sections.

Embodiment 1. An electrolyte solution, comprising an organic solvent and an additive, wherein, the organic solvent comprises a first organic solvent shown in Formula 1,

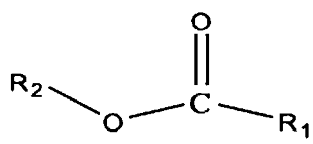 Formula 1,

in Formula 1, $R_1$ and $R_2$ are each independently one of C1-C3 alkyl and C1-C3 haloalkyl;
the additive comprises a first additive selected from one or more of compounds represented by Formula 2A and Formula 2B,

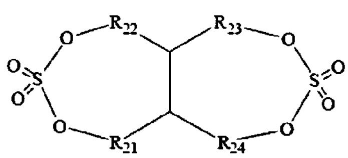 Formula 2A, and 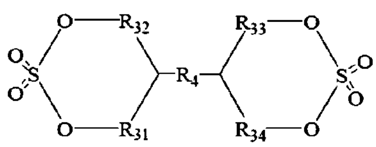 Formula 2B,

in Formula 2A, $R_{21}$, $R_{22}$, $R_{23}$ and $R_{24}$ are each independently one of a single bond and methylene,
in Formula 2B, $R_{31}$, $R_{32}$, $R_{33}$ and $R_{34}$ are each independently one of a single bond and methylene, and

$R_4$ is one of a single bond, -O-, C1-C3 alkylene, C1-C3 haloalkylene, and C1-C3 oxaalkylene.

Embodiment 2. The electrolyte solution according to embodiment 1, wherein,

$R_1$ and $R_2$ are each independently one of methyl, ethyl, propyl, fluoromethyl, fluoroethyl, and fluoropropyl; and/or $R_{21}$, $R_{22}$, $R_{23}$ and $R_{24}$ are not all single bonds; optionally, one or both of $R_{21}$ and $R_{22}$ are methylene, and one or both of $R_{23}$ and $R_{24}$ are methylene; and/or
$R_{31}$, $R_{32}$, $R_{33}$, and $R_{34}$ are each independently one of a single bond and methylene, and $R_{31}$, $R_{32}$, $R_{33}$, and $R_{34}$ are not all single bonds; and/or
$R_4$ is one of a single bond, -O-, methylene, ethylene, propylene, fluoromethylene, fluoroethylene, fluoropropylene, methyleneoxy, ethyleneoxy, and propyleneoxy; optionally, $R_4$ is one of a single bond, methylene, ethylene, and propylene.

Embodiment 3. The electrolyte solution according to any one of embodiments 1 to 2, wherein $R_{31}$, $R_{32}$, $R_{33}$, $R_{34}$, and $R_4$ further satisfy one of the following (1) to (6):

(1) $R_4$ is a single bond, one or both of $R_{31}$ and $R_{32}$ are methylene, and the rest are single bonds,
(2) $R_4$ is a single bond, one or both of $R_{33}$ and R $_{34}$ are methylene, and the rest are single bonds,
(3) $R_4$ is a single bond, one of $R_{31}$ and $R_{32}$ is methylene, one of $R_{33}$ and $R_{34}$ is methylene, and the rest are single bonds,
(4) $R_4$ is a single bond, both $R_{31}$ and $R_{32}$ are methylene, one of $R_{33}$ and $R_{34}$ is methylene, and the rest are single bonds,
(5) $R_4$ is a single bond, both $R_{33}$ and $R_{34}$ are methylene, one of $R_{31}$ and $R_{32}$ is methylene, and the rest are single bonds, and
(6) $R_4$ is a single bond, and $R_{31}$, $R_{32}$, $R_{33}$ and $R_{34}$ are all methylene.

Embodiment 4. The electrolyte solution according to any one of embodiments 1 to 3, wherein, the first organic solvent is selected from one or more of the following compounds:

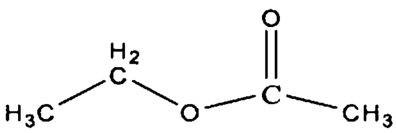 Compound 1-1, 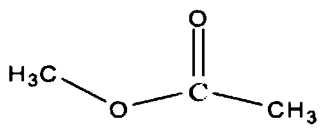 Compound 1-2,

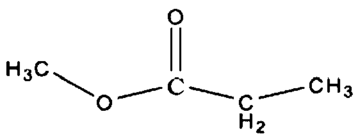 Compound 1-3, 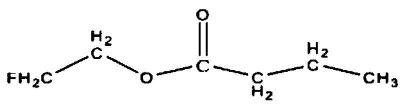 Compound 1-4,

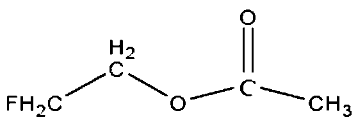 Compound 1-5, 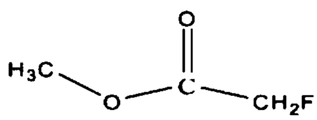 Compound 1-6,

optionally, the first organic solvent is selected from one or both of the following compounds:

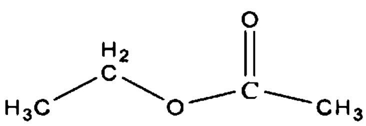 Compound 1-1, 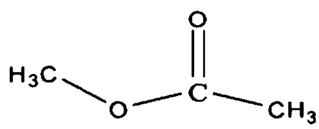 Compound 1-2.

Embodiment 5. The electrolyte solution according to any one of embodiments 1 to 4, wherein, the first additive is selected from one or more of the following compounds:

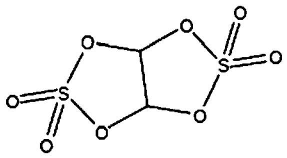 Compound 2-1, 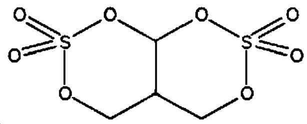 Compound 2-2,

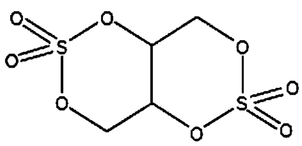 Compound 2-3, 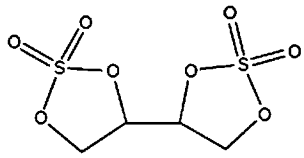 Compound 2-4,

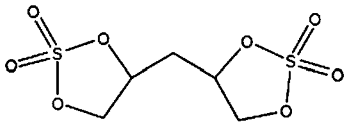 Compound 2-5, 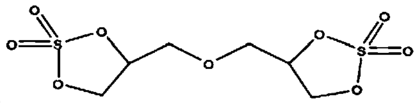 Compound 2-6,

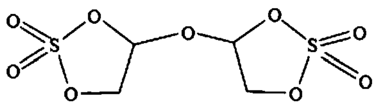 Compound 2-7, 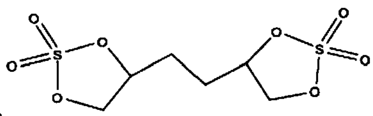 Compound 2-8,

optionally, the first additive is selected from one or more of the following compounds:

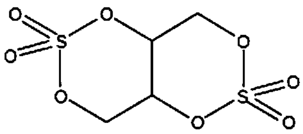 Compound 2-3, 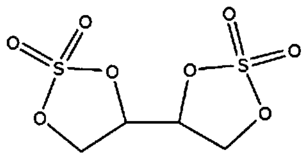 Compound 2-4,

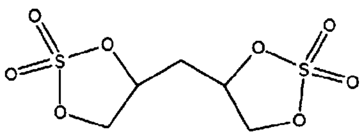 Compound 2-5, 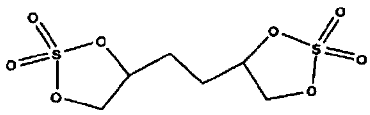 Compound 2-8.

Embodiment 6. The electrolyte solution according to any one of embodiments 1 to 5, wherein, based on the total mass of the organic solvent, the mass percentage w1 of the first organic solvent is in the range of 20% to 80%, and optionally 30% to 70%.

Embodiment 7. The electrolyte solution according to any one of embodiments 1 to 6, wherein, based on the total mass of the electrolyte solution, the mass percentage w2 of the first additive is in the range of 0.1% to 10%, and optionally 0.5% to 5%.

Embodiment 8. The electrolyte solution according to any one of embodiments 1 to 7, wherein, the additive further comprises a second additive, and the second additive comprises one or more of cyclic carbonate compounds containing an unsaturated bond, halogen-substituted cyclic carbonate compounds, sulfate compounds, sulfite compounds , sultone compounds, disulfonic acid compounds, nitrile compounds, aromatic compounds, isocyanate compounds, phosphazene compounds, cyclic acid anhydride compounds, phosphite compounds, phosphate compounds, borate compounds, and carboxylate compounds,

optionally, the second additive comprises one or two of the following compounds:

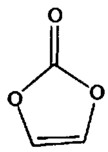 Compound 3-1, 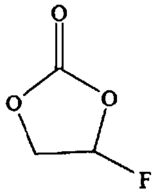 Compound 3-2.

Embodiment 9. The electrolytesolution according to any one of embodiments 1 to 8, wherein, based on the total m ass of the electrolyte solution, the mass percentage w3 of the second additive is ≤10%, and optionally ≤5%.

Embodiment 10. The electrolyte solution according to any one of embodiments 1 to 9, wherein, the organic solvent further comprises a second organic solvent, the second organic solvent comprises one or more of a cyclic carbonate compound and a chain carbonate compound, and optionally comprises a cyclic carbonate compound, or comprises a combination of a cyclic carbonate compound and a chain carbonate compound.

Embodiment 11. The electrolyte solution according to any one of embodiments 1 to 10, wherein, the organic solvent further comprises a second organic solvent, and the second organic solvent comprises one or more of ethylene carbonate, propylene carbonate, 1,2-butene carbonate, dimethyl carbonate, methyl ethyl carbonate, diethyl carbonate, dipropyl carbonate, methyl propyl carbonate and ethyl propyl carbonate.

Embodiment 12. The electrolyte solution according to embodiments 1 to 11, wherein, based on the total mass of the organic solvent, the mass percentage w4 of the cyclic carbonate compound is in the range of 20% to 80%, and optionally 20% to 50%.

Embodiment 13. The electrolyte solution according to any one of embodiments 1 to 12, wherein, the electrolyte solution further comprises a lithium salt, and the lithium salt comprises one or more of $LiN(C_xF_{2x+1}SO_2)(C_yF_{2y+1}SO_2)$, $LiPF_6$, $LiBF_4$, LiBOB, LiDFOB, $LiPO_2F_2$, LiDFOP, LiTFOP, $LiAsF_6$, $Li(FSO_2)_2N$, $LiCF_3SO_3$ and $LiClO_4$, wherein x and y are positive integers.

Embodiment 14. The electrolyte solution according to any one of embodiments 1 to 13, wherein the conductivity of the electrolyte solution satisfies ≥ 12mS/cm, optionally ≥ 13mS/cm, and more specifically, the conductivity of the electrolyte solution is 12mS/cm to 24mS/cm or 13mS/cm to 20mS/cm.

Embodiment 15. A secondary battery, comprising the electrolyte solution according to any one of embodiments 1 to 14.

Embodiment 16. The secondary battery according to embodiment 15, wherein, the secondary battery comprises a negative electrode sheet, and the negative electrode sheet comprises a negative electrode current collector and a negative electrode film layer provided on at least one surface of the negative electrode current collector and comprising a negative electrode active material, the ratio H/Dv50 of the thickness H of the single-sided negative electrode film layer to the volume average particle size Dv50 of the negative electrode active material satisfies ≥3, and optionally 4≤H/Dv50≤9.

Embodiment 17. The secondary battery according to any one of embodiments 15 to 16, wherein,

the thickness H of the single-sided negative electrode film layer satisfies ≥60μm, and optionally ≥65μm; and/or the volume average particle size Dv50 of the negative electrode active material satisfies ≤18μm, and optionally 14μm≤Dv50≤18μm.

Embodiment 18. The secondary battery according to any one of embodiments 15 to 17, wherein, the compaction density of the negative electrode film layer is 1.4g/cm$^3$ to 1.85g/cm$^3$, and optionally 1.6g/cm$^3$ to 1.8g/cm$^3$.

Embodiment 19. The secondary battery according to any one of embodiments 15 to 18, wherein the secondary battery comprises a positive electrode sheet, the positive electrode sheet comprises a positive electrode active material, and the positive electrode active material comprises one or more of lithium transition metal oxides, olivine-structured lithium-containing phosphates and their respective modified compounds,

optionally, the olivine-structured lithium-containing phosphate comprises one or more of lithium iron phosphate, composite materials of lithium iron phosphate and carbon, lithium manganese phosphate, composite materials of lithium manganese phosphate and carbon, lithium manganese iron phosphate, composite materials of lithium manganese iron phosphate and carbon, and their modified compounds.

Embodiment 20. A battery module, comprising the secondary battery according to any one of embodiments 15 to 19.

Embodiment 21. A battery pack, comprising one of the secondary batteries according to any one of embodiments 15 to 19, and one of the battery module according to embodiment 20.

22. A powered device, comprising at least one of the secondary batteries according to any one of embodiments 15 to 19, the battery module according to embodiment 20, and the battery pack according to embodiment 21.

It should be noted that the present application is not limited to the above-mentioned embodiments. The above-described embodiments are merely illustrative, and embodiments having substantially the same configuration as the technical idea of the present application and exerting the same effects within the scope of the technical solution of the present application are all comprised in the technical scope of the present application. In addition, without departing from the gist of the present application, various modifications applied to the embodiments that can be conceived by those skilled in the art, and other embodiments constructed by combining some of the constituent elements of the embodiments of the present application are also comprised in the scope of the present application.

## Claims

1. A secondary battery, comprising an electrolyte solution, wherein the electrolyte solution comprising an organic solvent and an additive,

   wherein, the organic solvent comprises a first organic solvent shown in Formula 1,

   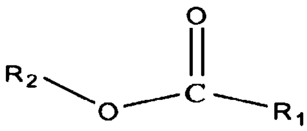 Formula 1,

   in Formula 1, $R_1$ and $R_2$ are each independently one of C1-C3 alkyl and C1-C3 haloalkyl;
   the additive comprises a first additive selected from one or more of compounds represented by Formula 2A and Formula 2B,

   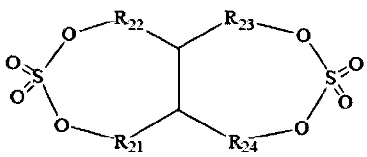 Formula 2A, and 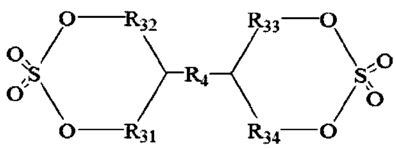 Formula 2B,

   in Formula 2A, $R_{21}$, $R_{22}$, $R_{23}$ and $R_{24}$ are each independently one of a single bond and methylene,
   in Formula 2B, $R_{31}$, $R_{32}$, $R_{33}$ and $R_{34}$ are each independently one of a single bond and methylene, and
   $R_4$ is one of a single bond, -O-, C1-C3 alkylene, C1-C3 haloalkylene, and C1-C3 oxaalkylene.

2. The secondary battery according to claim 1, wherein,

   $R_1$ and $R_2$ are each independently one of methyl, ethyl, propyl, fluoromethyl, fluoroethyl, and fluoropropyl; and/or
   $R_{21}$, $R_{22}$, $R_{23}$ and $R_{24}$ are not all single bonds; optionally, one or both of $R_{21}$ and $R_{22}$ are methylene, and one or both of $R_{23}$ and $R_{24}$ are methylene; and/or
   $R_{31}$, $R_{32}$, $R_{33}$, and $R_{34}$ are each independently one of a single bond and methylene, and $R_{31}$, $R_{32}$, $R_{33}$, and $R_{34}$ are not all single bonds; and/or
   $R_4$ is one of a single bond, -O-, methylene, ethylene, propylene, fluoromethylene, fluoroethylene, fluoropropylene, methyleneoxy, ethyleneoxy, and propyleneoxy; optionally, $R_4$ is one of a single bond, methylene, ethylene, and propylene.

3. The secondary battery according to any one of claims 1 to 2, wherein $R_{31}$, $R_{32}$, $R_{33}$, $R_{34}$, and $R_4$ further satisfy one of the following (1) to (6):

   (1) $R_4$ is a single bond, one or both of $R_{31}$ and $R_{32}$ are methylene, and the rest are single bonds,
   (2) $R_4$ is a single bond, one or both of $R_{33}$ and $R_{34}$ are methylene, and the rest are single bonds,
   (3) $R_4$ is a single bond, one of $R_{31}$ and $R_{32}$ is methylene, one of $R_{33}$ and $R_{34}$ is methylene, and
   (4) $R_4$ is a single bond, both $R_{31}$ and $R_{32}$ are methylene, one of $R_{33}$ and $R_{34}$ is methylene, and the rest are single bonds,
   (5) $R_4$ is a single bond, both $R_{33}$ and $R_{34}$ are methylene, one of $R_{31}$ and $R_{32}$ is methylene, and the rest are single bonds, and
   (6) $R_4$ is a single bond, and $R_{31}$, $R_{32}$, $R_{33}$ and $R_{34}$ are all methylene.

**4.** The secondary battery according to any one of claims 1 to 3, wherein, the first organic solvent is selected from one or more of the following compounds:

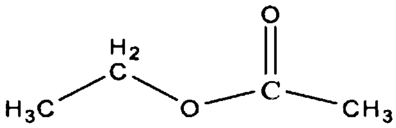 Compound 1-1, 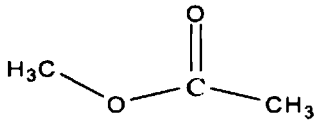 Compound 1-2,

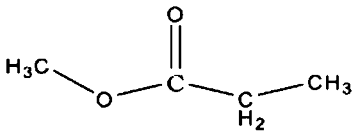 Compound 1-3, 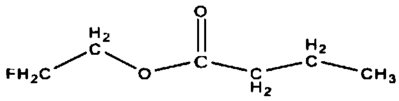 Compound 1-4,

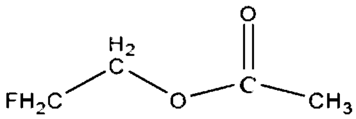 Compound 1-5, 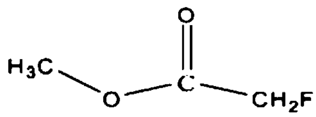 Compound 1-6,

optionally, the first organic solvent is selected from one or both of the following compounds:

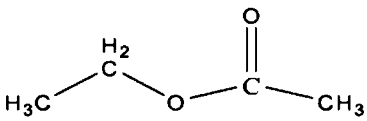 Compound 1-1, 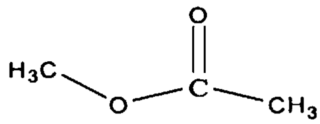 Compound 1-2.

**5.** The secondary battery according to any one of claims 1 to 4, wherein, the first additive is selected from one or more of the following compounds:

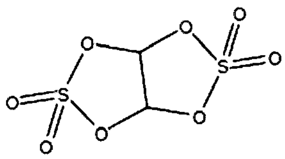 Compound 2-1, 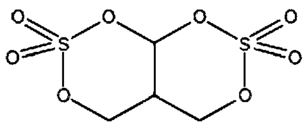 Compound 2-2,

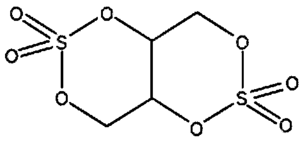 Compound 2-3, 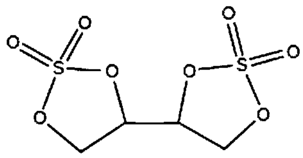 Compound 2-4,

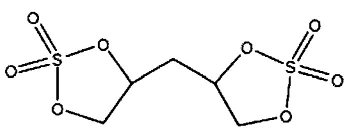 Compound 2-5, 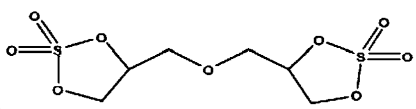 Compound 2-6,

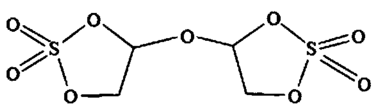 Compound 2-7, 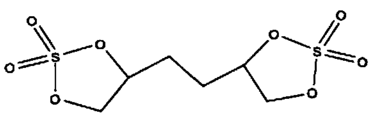 Compound 2-8,

optionally, the first additive is selected from one or more of the following compounds:

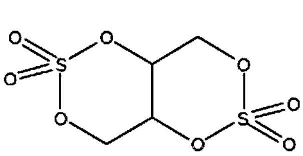 Compound 2-3, 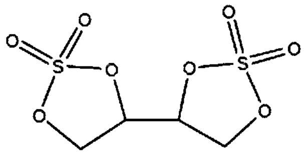 Compound 2-4,

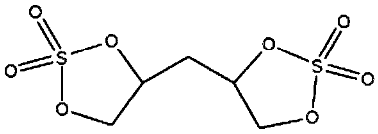 Compound 2-5, 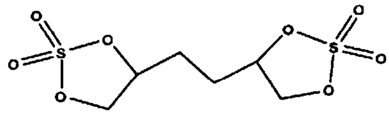 Compound 2-8.

**6.** The secondary battery according to any one of claims 1 to 5, wherein, based on the total mass of the organic solvent, the mass percentage w1 of the first organic solvent is in the range of 20% to 80%, and optionally 30% to 70%.

**7.** The secondary battery according to any one of claims 1 to 6, wherein, based on the total mass of the electrolyte solution, the mass percentage w2 of the first additive is in the range of 0.1% to 10%, and optionally 0.5% to 5%.

**8.** The secondary battery according to any one of claims 1 to 7, wherein, the additive further comprises a second additive, and the second additive comprises one or more of cyclic carbonate compounds containing an unsaturated bond, halogen-substituted cyclic carbonate compounds, sulfate compounds, sulfite compounds , sultone compounds, disulfonic acid compounds, nitrile compounds, aromatic compounds, isocyanate compounds, phosphazene compounds, cyclic acid anhydride compounds, phosphite compounds, phosphate compounds, borate compounds, and carboxylate compounds,
optionally, the second additive comprises one or two of the following compounds:

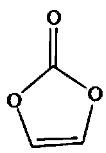 Compound 3-1, 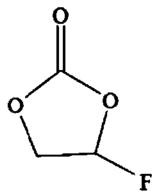 Compound 3-2.

**9.** The secondary battery according to any one of claims 1 to 8, wherein, based on the total m ass of the electrolyte solution, the mass percentage w3 of the second additive is ≤10%, and optionally ≤5%.

**10.** The secondary battery according to any one of claims 1 to 9, wherein, the organic solvent further comprises a second organic solvent, the second organic solvent comprises one or more of a cyclic carbonate compound and a chain carbonate compound, and optionally comprises a cyclic carbonate compound, or comprises a combination of a cyclic carbonate compound and a chain carbonate compound;
and/or

wherein, the organic solvent further comprises a second organic solvent, and the second organic solvent comprises one or more of ethylene carbonate, propylene carbonate, 1,2-butene carbonate, dimethyl carbonate, methyl ethyl carbonate, diethyl carbonate, dipropyl carbonate, methyl propyl carbonate and ethyl propyl carbonate;
and/or
wherein, based on the total mass of the organic solvent, the mass percentage w4 of the cyclic carbonate compound is in the range of 20% to 80%, and optionally 20% to 50%.

**11.** The secondary battery according to any one of claims 1 to 12, wherein, the electrolyte solution further comprises a lithium salt, and the lithium salt comprises one or more of $LiN(C_xF_{2x+1}SO_2)(C_yF_{2y+1}SO_2)$, $LiPF_6$, $LiBF_4$, LiBOB, LiDFOB, $LiPO_2F_2$, LiDFOP, LiTFOP, $LiAsF_6$, $Li(FSO_2)_2N$, $LiCF_3SO_3$ and $LiClO_4$, wherein x and y are positive integers;
and/or
wherein the conductivity of the electrolyte solution satisfies ≥ 12mS/cm, optionally ≥ 13mS/cm, and more specifically, the conductivity of the electrolyte solution is 12mS/cm to 24mS/cm or 13mS/cm to 20mS/cm.

**12.** The secondary battery according to any of claims 1-11, wherein, the secondary battery comprises a negative electrode sheet, and the negative electrode sheet comprises a negative electrode current collector and a negative electrode film layer provided on at least one surface of the negative electrode current collector and comprising a negative electrode active material, the ratio H/Dv50 of the thickness H of the single-sided negative electrode film layer to the volume average particle size Dv50 of the negative electrode active material satisfies ≥3, and optionally 4≤H/Dv50≤9;
and/or

wherein,
the thickness H of the single-sided negative electrode film layer satisfies ≥60μm, and optionally ≥65μm; and/or the volume average particle size Dv50 of the negative electrode active material satisfies ≤18μm, and optionally 14μm≤Dv50≤18μm;
and/or
wherein, the compaction density of the negative electrode film layer is 1.4g/$cm^3$ to 1.85g/$cm^3$, and optionally 1.6g/$cm^3$ to 1.8g/$cm^3$;
and/or
wherein the secondary battery comprises a positive electrode sheet, the positive electrode sheet comprises a positive electrode active material, and the positive electrode active material comprises one or more of lithium transition metal oxides, olivine-structured lithium-containing phosphates and their respective modified compounds,
optionally, the olivine-structured lithium-containing phosphate comprises one or more of lithium iron phosphate, composite materials of lithium iron phosphate and carbon, lithium manganese phosphate, composite materials of lithium manganese phosphate and carbon, lithium manganese iron phosphate, composite materials of lithium manganese iron phosphate and carbon, and their modified compounds.

**13.** An electrolyte solution, comprising an organic solvent and an additive,

wherein, the organic solvent comprises a first organic solvent shown in Formula 1,

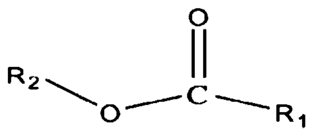

Formula 1,

in Formula 1, $R_1$ and $R_2$ are each independently one of C1-C3 alkyl and C1-C3 haloalkyl;
the additive comprises a first additive selected from one or more of compounds represented by Formula 2A and Formula 2B,

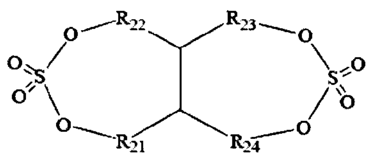

Formula 2A, and

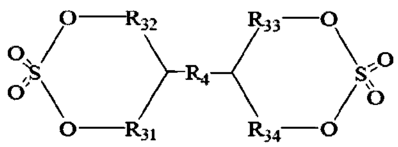

Formula 2B,

in Formula 2A, $R_{21}$, $R_{22}$, $R_{23}$ and $R_{24}$ are each independently one of a single bond and methylene,
in Formula 2B, $R_{31}$, $R_{32}$, $R_{33}$ and $R_{34}$ are each independently one of a single bond and methylene, and $R_4$ is one of a single bond, -O-, C1-C3 alkylene, C1-C3 haloalkylene, and C1-C3 oxaalkylene.

**14.** A battery pack, comprising one of the secondary batteries according to any one of claims 1 to 12, and the electrolyte solution according to claim 13.

**15.** A powered device, comprising at least one of the secondary batteries according to any one of claims 1 to 12, and the electrolyte solution according to claim 13.

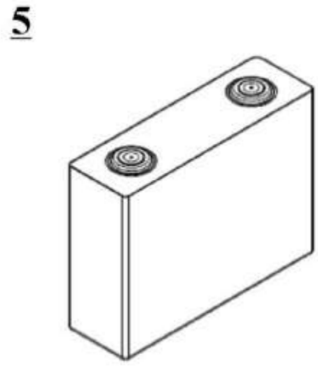


FIG. 1

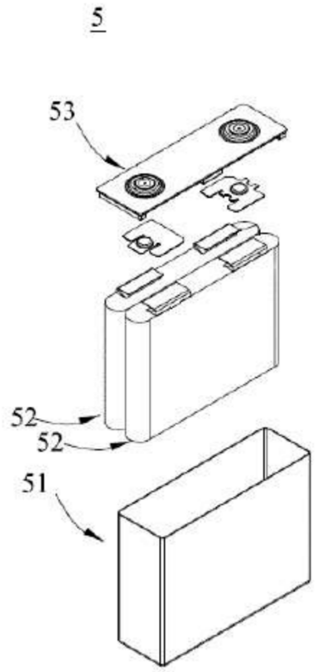


FIG. 2

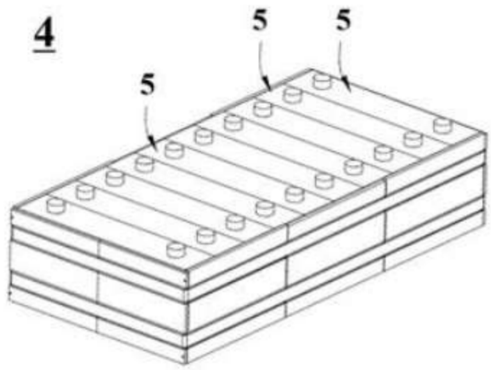


FIG. 3

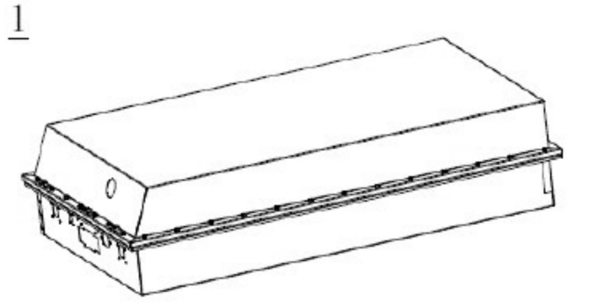


FIG. 4

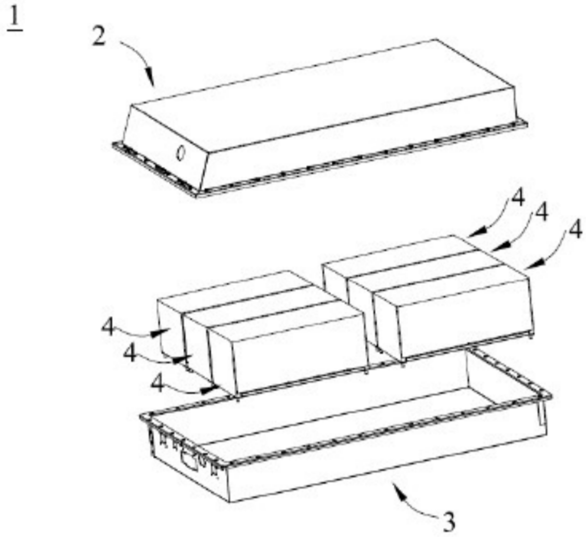


FIG. 5

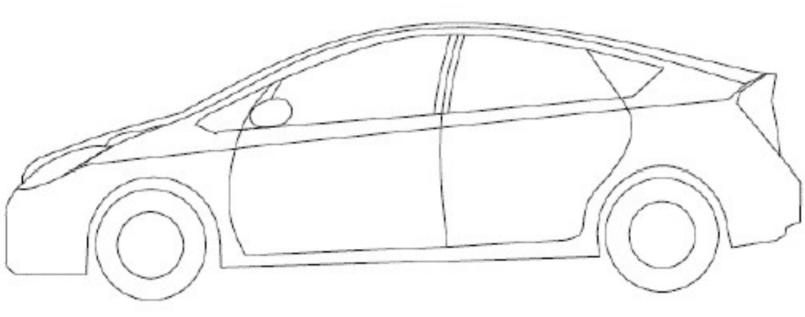

FIG. 6